# EUROPEAN PATENT SPECIFICATION

(11) **EP 3 162 690 B1**
(45) Date of publication and mention of the grant of the patent: **06.03.2019**
(21) Application number: 15810838.1
(22) Date of filing: 26.06.2015
(51) Int. Cl.: B63B 1/38

(54) **AIR SUPPLY CONTROL SYSTEM FOR AIR LUBRICATED MARINE VESSEL, AND AIR LUBRICATED MARINE VESSEL**
LUFTZUFUHRSTEUERUNGSSYSTEM FÜR LUFTGESCHMIERTES WASSERFAHRZEUG SOWIE LUFTGESCHMIERTES WASSERFAHRZEUG
SYSTÈME DE COMMANDE D'ALIMENTATION EN AIR POUR UN NAVIRE LUBRIFIÉ PAR L'AIR, ET NAVIRE LUBRIFIÉ PAR L'AIR

(30) Priority: 27.06.2014 JP 2014133050
(43) Date of publication of application: 03.05.2017
(73) Proprietor: National Institute of Maritime, Port and Aviation Technology, Tokyo 181-0004 (JP)
(72) Inventor: FUKUDA, Tetsugo, Mitaka-shi Tokyo 181-0004 (JP); BONDARENKO, Oleksiy, Mitaka-shi Tokyo 181-0004 (JP)
(74) Representative: Körfer, Thomas
(86) International application number: PCT/JP2015/003240
(87) International publication number: WO 2015/198613

(56) References cited:
- WO-A1-2014/080690
- JP-A- 2010 048 225
- JP-A- 2012 171 582
- JP-A- 2013 091 376
- JP-A- 2013 129 406
- JP-A- 2014 076 783
- US-A1- 2008 083 361
- US-A1- 2011 259 440

## Description

### [TECHNICAL FIELD]

The present invention relates to an air supply control system of an air lubrication type ship and the air lubrication type ship for reducing friction resistance of water existing along an outer surface of a ship's hull less than draft line of the ship during marine navigation.

### [BACKGROUND TECHNIQUE]

In a ship during marine navigation, a submerged surface of a ship's hull receives friction resistance of water. Especially in the case of a large ship, most of portion of ship's hull resistance is occupied by friction resistance generated by relative current of outside water in the submerged surface.

To reduce ship's hull friction resistance by air lubrication which discharges air into surroundings of the ship's hull and which reduces the friction resistance has a large energy-saving effect, and this is effective means to reduce the emission of CO₂ from the ship.

Air of the air lubrication type ship is supplied mainly by a method to send air by an electric blower and by a scavenging bypass method.

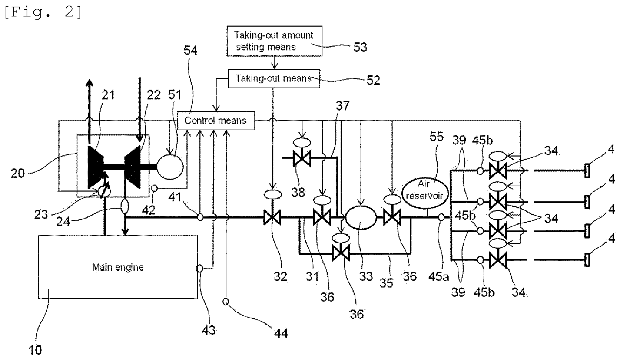

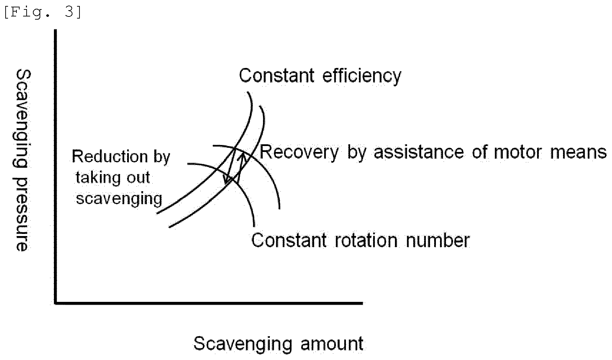

Patent document 1 proposes an air supply control system using both the method to send air by an electric blower and by the scavenging bypass method (example shown in Figs. 2 and 3) .

There is already proposed a power-assisted turbocharger which electrically or hydraulically assists a turbocharger when engine load is low, and which improve actuation and low-load performance of the engine (see patent document 2 for example).
An air supply control system with the features of the preamble of claim 1 is known from US 2011/0259440 A1. However, the features of characterizing part of claim 1 are not known from this document.

A turbocharger having a variable nozzle is already proposed. Patent document 3 proposes a compressed air supply control system of a ship. According to this compressed air supply control system, when combustion air is bled and the combustion air is discharged to an outer surface of a ship's hull, the variable nozzle is narrowed, and when the combustion air is bled and is not discharged to the outer surface of the ship's hull, control is performed to open the variable nozzle.

In patent document 3, when air is bled and sent to a ship's bottom, a turbine nozzle is narrowed to increase output of the turbocharger turbine, and an air amount which is necessary to discharge air bubbles are secured, and when it is unnecessary to send air to the ship's bottom, the turbine nozzle is opened, and rise of scavenging pressure when air is not bled can be suppressed.

Patent document 4 proposes a structure in which in a friction resistance reduction device of a ship, compressed air from a fluid machine driven by an electric motor is discharged from an injection port provided in a ship's bottom, and a portion of compression air discharged from a turbocharger which is driven by exhaust gas of an engine and which supplies the compressed air to the engine.

### [PRIOR ART DOCUMENTS]

### [PATENT DOCUMENTS]

[Patent Document 1] Japanese Patent Application Laid-open No.2013-193624
[Patent Document 2] Japanese Patent Application Laid-open No.2008-240585
[Patent Document 3] Japanese Patent Application Laid-open No.2012-171582
[Patent Document 4] Japanese Patent Application Laid-open No.2014-113874

### [SUMMARY OF THE INVENTION]

### [PROBLEM TO BE SOLVED BY THE INVENTION]

In the meantime, in a method to send air by the electric blower, an inter-cooler is necessary in addition to a high performance (turbo type) electric blower.

According to the method by the scavenging bypass, a load of a main engine is low at the time of reduced-speed operation of a ship, and discharge gas energy is low. Therefore, air cannot sufficiently be taken out from the turbocharger in some cases. In recent years, since the reduced-speed operation is employed, a case where air cannot sufficiently be taken out from the turbocharger increases.

According to patent document 1, air cannot sufficiently be taken out from the turbocharger when a load of a main engine is low.

The power-assisted turbochargers are frequently proposed as in patent document 2, and the turbocharger having the variable nozzle is also already proposed in patent document 3, but there is not proposed a technique in which a turbocharger is assisted in accordance with settings of a taking-out amount of pressurized air such as scavenging.

Further, patent document 4 does not propose a technique in which a turbocharger is assisted in accordance with setting of a taking-out amount of pressurized air such as scavenging while taking a load of an engine and draft of a ship into account.

Hence, it is an object of the present invention to provide an air supply control system of an air lubrication type ship capable of efficiently taking out, from a turbocharger, pressurized air which is necessary for air lubrication, and capable of efficiently air-lubricating without lowering operation efficiency of a main engine even if draft water pressure of a ship and a load of the main engine are varied.

### [MEANS FOR SOLVING THE PROBLEM]

An air supply control system of an air lubrication type ship corresponding to description of claim 1 comprises a turbocharger which is driven by exhaust gas from a main engine of the ship and which supplies pressurized air to the main engine, a taking-out means which takes out a portion of the pressurized air from between the turbocharger and the main engine through bypassing, an air supply passage for supplying the taken out pressurized air to an air supply port provided below a draft of the ship, motor means for assisting rotation of the turbocharger, taking-out amount setting means for setting a taking-out amount of the pressurized air by the taking-out means, and control means which takes a load of the main engine and the draft of the ship into account, and which controls the motor means in accordance with setting of the taking-out amount by the taking-out amount setting means. According to the present invention described in claim 1, rotation of the turbocharger is assisted by the motor means in accordance with setting of the taking-out amount of the pressurized air. According to this, even at the time of low load operation of the main engine, it is possible to efficiently take out pressurized air which is necessary for air lubrication from the turbocharger. By taking a load of the main engine and draft of the ship into account, even if the draft of the ship and the load of the main engine are varied, it is possible to efficiently carry out the air lubrication without deteriorating the operation efficiency of the main engine.

According to the invention described in claim 2, the control means controls the motor means while taking into account, scavenging pressure of the turbocharger determined by the load of the main engine and draft pressure determined by the draft of the ship. According to the invention of claim 2, a load of the main engine is taken into account by the scavenging pressure and draft of the ship is taken into account by the draft pressure, rotation of the turbocharger can be assisted by the motor means in accordance with setting of the taking-out amount of the pressurized air.

According to the invention described in claim 3, when the taking-out amount exceeds a predetermined amount which is determined by turbocharger ability of the turbocharger and the scavenging pressure or the draft pressure, the control means operates the motor means.
According to the invention of claim 3, when the taking-out amount of the pressurized air exceeds the predetermined amount which is determined by the turbocharger ability of the turbocharger and the scavenging pressure or draft pressure, and when the scavenging pressure is reduced for example, the turbocharger is assisted by the motor means . According to this, the operation of the main engine is not hindered. Air lubrication can efficiently be carried out against dynamic variation such as variation of load capacity of a ship, variation of ship speed and swing of a ship's hull.

According to the invention described in claim 4, the predetermined amount is determined by higher one of the scavenging pressure and the draft pressure, and the turbocharger ability.
According to the invention described in claim 3, by operating the motor means on the basis on higher one of the higher scavenging pressure and draft pressure, it is possible to effectively carry out more the air lubrication without deteriorating the operation efficiency of the main engine.

According to the invention described in claim 5, the control means controls the motor means such that the scavenging pressure of downstream-side of an inter-cooler provided in a passage extending between the turbocharger and the main engine is kept at predetermined pressure.
According to the invention described in claim 5, by keeping the scavenging pressure at predetermined pressure, it is possible to carry out the air lubrication without deteriorating the operation efficiency of the main engine.

According to the invention described in claim 6, the air supply passage is provided with an assist blower which further pressurizes the taken out pressurized air. According to the invention described in claim 6, it is possible to further pressurize the pressurized air up to pressure which is suitable for air lubrication by the assist blower.

According to the invention described in claim 7, when the motor means is driven and rotation of the turbocharger is assisted, if pressure of the taken out pressurized air is not sufficient, the control means drives the assist blower to further pressurize the taken out pressurized air. According to the invention described in claim 7, when pressure of the pressurized air is not sufficient even if rotation of the turbocharger is assisted by the motor means, it is possible to further pressurize the pressurized air up to pressure which is suitable for air lubrication by the assist blower.

According to the invention described in claim 8, the control means drives the assist blower based on the draft of the ship, and when the pressure of the pressurized air which is necessary in accordance with the load of the main engine is not sufficient, the control means operates the motor means. According to the invention described in claim 8, when pressure of the pressurized air which is necessary in accordance with a load of the main engine is sufficient, the assist blower is first driven based on the draft. Hence, it is possible to suppress the frequency of operations of the motor means, and to reduce the energy amount which is necessary to supply the pressurized air.

According to the invention described in claim 9, the turbocharger includes a variable nozzle, the control means controls the variable nozzle before the control means drives the motor means, thereby further pressurizing the pressurized air. According to the invention described in claim 9, pressure can be set to the scavenging pressure which is suitable for the main engine by the variable nozzle, and when pressure cannot be set to sufficient scavenging pressure by the variable nozzle, energy efficiently can be enhanced by driving the motor means.

According to the invention described in claim 10, the air supply control system further comprises a scavenging pressure detector which detects the scavenging pressure. According to the invention described in claim 10, by providing the scavenging pressure detector, the scavenging pressure can precisely be kept at the predetermined pressure using a detection value of the scavenging pressure detector.

According to the invention described in claim 11, the air supply control system further comprises a turbocharger rotation number detector for detecting rotation number of the turbocharger, wherein the scavenging pressure is obtained based on the rotation number and turbocharger characteristics. According to the invention described in claim 11, even if the scavenging pressure detector is not provided, it is possible to calculate the scavenging pressure from both of the rotation number of the turbocharger and the characteristics of the turbocharger, and it is possible to keep the scavenging pressure at the predetermined pressure using the calculated vale.

According to the invention described in claim 12, the taking-out amount of the pressurized air is set based on a relation between a saved energy amount which is achieved by supply of the pressurized air taken out to the ship's hull and an energy amount which is necessary to supply the taken out pressurized air to the ship's hull. According to the invention described in claim 12, the taking-out amount of the pressurized air can having excellent energy efficiency.

According to the invention described in claim 13, the air supply control system of the air lubrication type ship, further comprises at least one more air supply port, a plurality of supply amount control valves for controlling a supply amount of the pressurized air taken out to the air supply ports, and rolling detection means which detects rolling of the ship's hull of the ship, wherein the control means controls the plurality of supply amount control valves based on a detection result of the rolling detection means, thereby reducing a supply amount of the pressurized air which is taken out to one of the air supply ports having lower draft pressure. According to the invention described in claim 13, even if the ship's hull swings and inclines by rolling, air lubrication can efficiently be carried out by reducing a supply amount of pressurized air to an air supply port having lower draft pressure.

According to the invention described in claim 14, the air supply control system further comprises at least one more air supply port, a plurality of supply amount control valves for controlling a supply amount of the pressurized air which is taken out to the air supply ports, and heel detection means for detecting a heel of the ship's hull of the ship, wherein the control means controls the plurality of supply amount control valves based on a detection result of the heel detection means, thereby reducing a supply amount of the pressurized air which is taken out to one of the air supply ports having lower draft pressure. According to the invention described in claim 14, even if the ship's hull keeps inclining by the heel, air lubrication can efficiently be carried out by reducing a supply amount of pressurized air to an air supply port having lower draft pressure.

According to the invention described in claim 15, the air supply control system further comprises at least one more air supply port, a plurality of supply amount control valves for controlling a supply amount of the pressurized air which is taken out to the air supply ports, and pitching detection means for detecting a pitching of the ship's hull of the ship, wherein the control means controls the plurality of supply amount control valves based on a detection result of the pitching detection means, thereby increasing or reducing a supply amount of the pressurized air taken out to the air supply ports in accordance with variation of the draft pressure. According to the invention described in claim 15, even if the ship's hull swings by the pitching and the draft pressure is varied, when the draft pressure is low, a supply amount of the pressurized air into the air supply port is reduced, thereby carrying out the air lubrication efficiently.

According to the invention described in claim 16, the air supply passage is provided with an air reservoir, and supply of the taken out pressurized air to the air supply port is stabilized. According to the invention described in claim 16, for example even if a load of the main engine is or draft pressure is varied by ship's hull movement in actual sea, a flow rate variation and pressure variation of the air supply passage are moderated, thereby it is possible to moderate the variation of an amount of air introduced into the main engine and variation of pressure and flow rate into air lubrication, and it is possible to provide an efficient system.

According to the invention described in claim 17, the control means closes a passage open/close valve provided downstream-side of the air reservoir when the taking out of the pressurized air is started, the taking-out means takes out the pressurized air and store the pressurized air in the air reservoir and then, the passage open/close valve is opened. According to the invention described in claim 17, when the taking-out operation of pressurized air is started, reduction of scavenging pressure in the main engine can be moderated.

According to the invention described in claim 18, the air supply control system of an air lubrication type ship is provided in the ship.
According to the invention described in claim 18, even when the main engine is operated with a low load, pressurized air which is necessary for the air lubrication can efficiently be taken out from the turbocharger without providing high performance (turbo type) electric blower. By taking a load of the main engine and draft of the ship into account, even if the draft of the ship and the load of the main engine are varied, it is possible to efficiently carry out the air lubrication without deteriorating the operation efficiency of the main engine.

### [EFFECT OF THE INVENTION]

According to the present invention, rotation of the turbocharger is assisted by the motor means in accordance with setting of the taking-out amount of the pressurized air. According to this, even at the time of low load operation of the main engine, it is possible to efficiently take out pressurized air which is necessary for air lubrication from the turbocharger. By taking a load of the main engine and draft of the ship into account, even if the draft of the ship and the load of the main engine are varied, it is possible to efficiently carry out the air lubrication without deteriorating the operation efficiency of the main engine.

If the control means controls the motor means while taking into account, scavenging pressure of the turbocharger determined by the load of the main engine and draft pressure determined by the draft of the ship, a load of the main engine is taken into account by the scavenging pressure and draft of the ship is taken into account by the draft pressure, rotation of the turbocharger can be assisted by the motor means in accordance with setting of the taking-out amount of the pressurized air.

When the taking-out amount exceeds a predetermined amount which is determined by turbocharger ability of the turbocharger and the scavenging pressure or the draft pressure, the control means operates the motor means, e.g., if the scavenging pressure is reduced, the turbocharger is assisted by the motor means. According to this, the operation of the main engine is not hindered. Further, air lubrication can efficiently be carried out against dynamic variation such as variation of load capacity of a ship, variation of ship speed and swing of a ship's hull.

When the predetermined amount is determined by higher one of the scavenging pressure and the draft pressure, and the turbocharger ability, by operating the motor means on the basis on higher one of the higher scavenging pressure and draft pressure, it is possible to effectively carry out more the air lubrication without deteriorating the operation efficiency of the main engine.

The control means controls the motor means such that the scavenging pressure of downstream-side of an inter-cooler provided in a passage extending between the turbocharger and the main engine is kept at predetermined pressure. According to this, by keeping the scavenging pressure at predetermined pressure, it is possible to carry out the air lubrication without deteriorating the operation efficiency of the main engine.

The air supply passage is provided with an assist blower which further pressurizes the taken out pressurized air. According to this, it is possible to further pressurize the pressurized air up to pressure which is suitable for air lubrication by the assist blower.

When the motor means is driven and rotation of the turbocharger is assisted, if pressure of the taken out pressurized air is not sufficient, the control means drives the assist blower to further pressurize the taken out pressurized air. According to this, when pressure of the pressurized air is not sufficient even if rotation of the turbocharger is assisted by the motor means, it is possible to further pressurize the pressurized air up to pressure which is suitable for air lubrication by the assist blower.

The control means drives the assist blower based on the draft of the ship, and when the pressure of the pressurized air which is necessary in accordance with the load of the main engine is not sufficient, the control means operates the motor means. According to this, when pressure of the pressurized air which is necessary in accordance with a load of the main engine is sufficient, the assist blower is first driven based on the draft. Hence, it is possible to suppress the frequency of operations of the motor means, and to reduce the energy amount which is necessary to supply the pressurized air.

The turbocharger includes a variable nozzle, the control means controls the variable nozzle before the control means drives the motor means, thereby further pressurizing the pressurized air. According to this, pressure can be set to the scavenging pressure which is suitable for the main engine by the variable nozzle, and when pressure cannot be set to sufficient scavenging pressure by the variable nozzle, energy efficiently can be enhanced by driving the motor means.

The air supply control system further comprises a scavenging pressure detector which detects the scavenging pressure. According to this, by providing the scavenging pressure detector, the scavenging pressure can precisely be kept at the predetermined pressure using a detection value of the scavenging pressure detector.

The air supply control system further comprises a turbocharger rotation number detector for detecting rotation number of the turbocharger, wherein the scavenging pressure is obtained based on the rotation number and turbocharger characteristics. According to this, even if the scavenging pressure detector is not provided, it is possible to calculate the scavenging pressure from both of the rotation number of the turbocharger and the characteristics of the turbocharger, and it is possible to keep the scavenging pressure at the predetermined pressure using the calculated vale.

The taking-out amount of the pressurized air is set based on a relation between a saved energy amount which is achieved by supply of the pressurized air taken out to the ship's hull and an energy amount which is necessary to supply the taken out pressurized air to the ship's hull. According to this, the taking-out amount of the pressurized air can having excellent energy efficiency.

The air supply control system of the air lubrication type ship, further comprises a plurality of the air supply port, a plurality of supply amount control valves for controlling a supply amount of the pressurized air taken out to the air supply ports, and rolling detection means which detects rolling of the ship's hull of the ship, wherein the control means controls the plurality of supply amount control valves based on a detection result of the rolling detection means, thereby reducing a supply amount of the pressurized air which is taken out to one of the air supply ports having lower draft pressure. According to this, even if the ship's hull swings and inclines by rolling, air lubrication can efficiently be carried out by reducing a supply amount of pressurized air to an air supply port having lower draft pressure.

The air supply control system further comprises a plurality of the air supply port, a plurality of supply amount control valves for controlling a supply amount of the pressurized air which is taken out to the air supply ports, and heel detection means for detecting a heel of the ship's hull of the ship, wherein the control means controls the plurality of supply amount control valves based on a detection result of the heel detection means, thereby reducing a supply amount of the pressurized air which is taken out to one of the air supply ports having lower draft pressure. According to this, even if the ship's hull keeps inclining by the heel, air lubrication can efficiently be carried out by reducing a supply amount of pressurized air to an air supply port having lower draft pressure.

The air supply control system further comprises a plurality of the air supply port, a plurality of supply amount control valves for controlling a supply amount of the pressurized air which is taken out to the air supply ports, and pitching detection means for detecting a pitching of the ship's hull of the ship, wherein the control means controls the plurality of supply amount control valves based on a detection result of the pitching detection means, thereby increasing or reducing a supply amount of the pressurized air taken out to the air supply ports in accordance with variation of the draft pressure. According to this, even if the ship's hull swings by the pitching and the draft pressure is varied, when the draft pressure is low, a supply amount of the pressurized air into the air supply port is reduced, thereby carrying out the air lubrication efficiently.

The air supply passage is provided with an air reservoir, and supply of the taken out pressurized air to the air supply port is stabilized. According to this, for example even if a load of the main engine is or draft pressure is varied by ship's hull movement in actual sea, a flow rate variation and pressure variation of the air supply passage are moderated, thereby it is possible to moderate the variation of an amount of air introduced into the main engine and variation of pressure and flow rate into air lubrication, and it is possible to provide an efficient system.

The control means closes a passage open/close valve provided downstream-side of the air reservoir when the taking out of the pressurized air is started, the taking-out means takes out the pressurized air and store the pressurized air in the air reservoir and then, the passage open/close valve is opened. According to this, when the taking-out operation of pressurized air is started, reduction of scavenging pressure in the main engine can be moderated.

According to the present invention, even when the main engine is operated with a low load, pressurized air which is necessary for air lubrication can efficiently be taken out from the turbocharger without providing high performance (turbo type) electric blower. By taking a load of the main engine and draft of the ship into account, even if the draft of the ship and the load of the main engine are varied, it is possible to provide an air lubrication type ship capable of efficiently carrying out air lubrication without deteriorating operation efficiency of the main engine.

### [BRIEF DESCRIPTION OF THE DRAWINGS]

Fig. 1 is a schematic configuration diagram of an air lubrication type ship provided with an air supply control system of an embodiment of the present invention;
Fig. 2 is a schematic configuration diagram of the air supply control system of the air lubrication type ship;
Fig. 3 is a diagram showing a relation between a scavenging amount and scavenging pressure of a turbocharger;
Fig. 4 is a diagram (condition 1) of a relation between pressure and a taking-out amount of scavenging;
Fig. 5 is a diagram (condition 2) of the relation between pressure and the taking-out amount of scavenging;
Fig. 6 is a diagram (condition 3) of the relation between pressure and the taking-out amount of scavenging;
Fig. 7 is a diagram (condition 4) of the relation between pressure and the taking-out amount of scavenging;
Fig. 8 is a diagram (condition 5) of the relation between pressure and the taking-out amount of scavenging;
Fig. 9 is a diagram (condition 2 (pressure drop permissible range is taken into account)) showing the relation between the pressure and the taking-out amount of scavenging;
Fig. 10 is a diagram showing a relation between scavenging pressure and the taking-out amount of the scavenging in an arbitrary load of a main engine;
Fig. 11 is a diagram (condition 3) showing a relation between pressure and a taking-out amount of the scavenging in another example;
Fig. 12 is a diagram (condition 5) showing a relation between pressure and a taking-out amount of the scavenging in another example;
Fig. 13 is a diagram showing a calculation method of the taking-out amount of the scavenging; and
Fig. 14 is a block diagram of an air supply control system of an air lubrication type ship according to another embodiment of the invention.

### [MODE FOR CARRYING OUT THE INVENTION]

An air supply control system of an air lubrication type ship of embodiments of the present invention will be described.

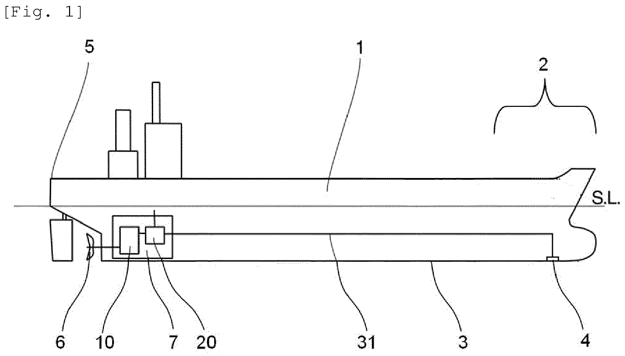

Fig. 1 is a schematic configuration diagram of an air lubrication type ship provided with an air supply control system of the embodiment of the present invention, and Fig. 2 is a schematic configuration diagram of the air supply control system of the air lubrication type ship.

As shown in Fig. 1, in the air lubrication type ship of the embodiment, a ship's bottom 3 of a stem portion 2 of a ship's hull 1 is provided with air supply ports 4. The air supply port 4 is provided in the ship's bottom 3 below draft of the ship's hull 1. Each of the air supply ports 4 discharges air as bubbles to the ship's bottom 3 of the ship's hull 1, and supplies bubbles to a wide region of the ship's bottom 3 below sea level S.L. to lubricate air. According to this, high friction resistance reduction effect can be obtained. The air supply port 4 may be combined not only with the ship's bottom 3 but also with a plurality of parts such as a ship side and the stem portion 2.

A stem 5 of the ship's hull 1 includes a drive source 7 which drives a propeller 6.

The drive source 7 includes a main engine 10 which is an internal combustion engine, and a turbocharger 20. The turbocharger 20 is driven by exhaust gas from the main engine 10, and supplies pressurized air to the main engine 10.

A portion of pressurized air before it is supplied to the main engine 10 can be sent to the air supply port 4 through the air supply passage 31.

Next, a configuration of the air supply control system of the air lubrication type ship will be described using Fig. 2.

The turbocharger 20 includes a turbine 21 which is provided in an exhaust gas passage of the main engine 10 and which takes out power from exhaust gas, a compressor 22 which is operated by the turbine 21, and a variable nozzle 23 which is placed on the exhaust gas introduction side of the turbine 21.

The variable nozzle 23 changes an direction and an angle of a nozzle blade or the exhaust gas passage, theregy changeing an exhaust gas passage, adjusts flow speed of exhaust gas supplied from the main engine 10, and can control scavenging pressure.

The air supply control system can be configured without using the variable nozzle 23.

A passage from the turbocharger 20 to the main engine 10 includes an inter-cooler 24.

Air which is pressurized and becomes hot by the compressor 22 is cooled by the inter-cooler 24 and is introduced into the main engine 10.

One end of the air supply passage 31 is connected between the turbocharger 20 and the main engine 10, and a portion of pressurized air is taken out from between the turbocharger 20 and the main engine 10. Although it is preferable that scavenging existing downstream-side of the inter-cooler 24 is taken out as pressurized air, air supply at upstream-side may be taken out as pressurized air. By using scavenging existing downstream-side of the inter-cooler 24 for lubricating air, energy efficiency can be enhanced. It is possible
to avoid a case where high temperature air is continuously supplied and a coating film of the ship's hull 1 is deteriorated.

The taken out pressurized air is supplied to the air supply port 4 through the air supply passage 31.

The air supply passage 31 is provided with a throttle amount variable take-out valve 32 which takes out a portion of the pressurized air between the turbocharger 20 and the main engine 10, and an assist blower 33 which further pressurizes pressurized air of the air supply passage 31. Even if the motor means 51 is driven and the rotation of the turbocharger 20 is assisted, if pressure of the taken out pressurized air is not sufficient, the pressurized air pressurized by the turbocharger 20 is further pressurized by the assist blower 33. According to this, it is possible to handle a case where a load amount is high and draft pressure becomes high, and a case where pressure becomes insufficient by supplying much air to the air supply port 4.

It is preferable that the assist blower 33 is a capacity type blower such as roots type or the like in which even if draft pressure is varied, variation of an air amount is small.

A scavenging pressure detector 41 which detects scavenging pressure is provided in the air supply passage 31 in the vicinity of a portion of the turbocharger 20 located upstream-side of the take-out valve 32. The scavenging pressure detector 41 may be provided in the scavenging passage between the inter-cooler 24 and the main engine 10. Since the air supply passage 31 close to the turbocharger 20 exists upstream-side of the take-out valve 32, the air supply passage 31 can measure the scavenging pressure which is substantially equal to the scavenging passage. The scavenging pressure detectors 41 can be provided in both the passage of the air supply passage 31 and the scavenging passage. When the scavenging pressure detectors 41 are provided in both the passages, it is possible to detect scavenging pressure more precisely by averaging procedure and the like. When this air supply control system is applied to an existing main engine 10 or an existing turbocharger 20, the operation becomes easier if the scavenging pressure detector 41 is provided in the air supply passage 31.

The air supply control system of the embodiment includes a bypass passage 35 which branches off from the air supply passage 31, bypasses the assist blower 33, and again merges with the air supply passage 31, and also includes bypass passage selecting means 36 which selects one of the air supply passage 31 and the bypass passage 35. By providing the bypass passage selecting means 36 in this manner, when it is unnecessary to further pressurize the taken out pressurized air, the bypass passage selecting means 36 selects the bypass passage 35, and it is possible to bypass the assist blower 33. When the assist blower 33 is not used, the bypass passage selecting means 36 provided in the bypass passage 35 is opened, and the bypass passage selecting means 36 provided in upper stream and lower stream of the assist blower 33 are closed. When the assist blower 33 is used, the bypass passage selecting means 36 provided in the bypass passage 35 is closed, and the bypass passage selecting means 36 provided in upper stream and lower stream of the assist blower 33 are opened. These controls are carried out in conjunction with the operation of the assist blower 33.

There are provided an atmosphere suction passage 37 which sends, to the assist blower 33, air sucked from atmosphere, and an atmosphere suction passage selecting means 38 which selects the air supply passage 31 and the atmosphere suction passage 37. When the assist blower 33 sucks air from the atmosphere and supplies the air to the air supply port 4, the atmosphere suction passage selecting means 38 is opened, the bypass passage selecting means 36 provided in the bypass passage 35 and the bypass passage selecting means 36 provided in upper stream of the assist blower 33 are closed, and the bypass passage selecting means 36 provided in lower stream of the assist blower 33 is opened. In this case, the take-out valve 32 is also closed, and the pressurized air is not taken out. When air from the atmosphere is pressurized by the assist blower 33 and is supplied, if the air from the atmosphere is pressurized and used, the air from the atmosphere can be discharged from the ship's bottom 3. For example, When the load of the main engine 10 is low and the amount of air is insufficient, or when draft pressure is low, air from the atmosphere is supplied directly to the air supply port 4 provided in the ship's bottom 3, thereby making it possible to further enhance the energy efficiency and energy-saving effect.

The air supply control system of the embodiment includes motor means 51 which assists rotation of the turbocharger 20, taking-out means 52 which operates the take-out valve 32 to takes out a portion of pressurized air, taking-out amount setting means 53 which sets a taking-out amount of the pressurized air by the taking-out means 52, and control means 54 controls the motor means 51 in accordance with setting of the taking-out amount by the taking-out amount setting means 53 while taking a load of the main engine 10 and draft of the ship into account. The taking-out amount setting means 53 can set the taking-out amount to zero, and has a setting function of operation/stop of air lubrication.

The motor means 51 may directly drive a drive shaft of the turbine 21 and the compressor 22 of the turbocharger 20 as an external motor means 51, but can form a rotor directly on the drive shaft and can drive by a stator provided therearound. The motor means 51 can be utilized as a power generator when assisting is unnecessary, and regenerative electric power can be obtained. Further, since it is an object to assist only the compressor 22 and to enhance more than the rotation speed by the turbine 21, the drive shaft may be provided with one-way clutch mechanism.

As the motor means 51, it is possible to use an air motor and a water pressure motor, but if an electric motor or a hydraulic motor is used, this is preferable in terms of easiness of utilization.

According to this embodiment, when air lubrication becomes necessary, the take-out valve 32 is opened, a portion of pressurized air is taken out and this is supplied to the air supply port 4 through the air supply passage 31. When pressurized air is supplied by the take-out valve 32, if rotation of the turbocharger 20 is assisted by the motor means 51, it is possible to efficiently take out, from the turbocharger 20, pressurized air which is necessary for air lubrication even when the main engine 10 is operated with low load.

Even if a circulation passage is opened when an exhaust gas recirculation operation is carried out for the main engine 10, and even if the pressurized air amount is reduced and the pressurized air pressure is lowered, the assisting operation of rotation of the turbocharger 20 by the motor means 51 can be carried out.

When the take-out valve 32 is opened and a portion of the pressurized air is taken out, it is also possible to utilize the variable nozzle 23 other than the motor means 51. That is, an direction and an angle of the nozzle blade of the variable nozzle 23 are changed in accordance with a taking-out state of pressurized air such as an opening of the take-out valve 32 and a taking-out amount of the pressurized air, and pressurizing characteristics of the pressurized air can be improved.

When the draft pressure becomes high and pressure of the taken out pressurized air is insufficient even if the motor means 51 and the variable nozzle 23 are utilized, this pressure can be supplemented by the assist blower 33 which further pressurizes the taken out pressurized air from the air supply passage 31.

The control means 54 controls the motor means 51 in accordance with setting of the taking-out amount of the pressurized air by the taking-out amount setting means 53. The taking-out amount setting means 53 sets the operation of the air lubrication. When the taking-out amount exceeds the predetermined amount, the motor means 51 is controlled. By assisting the rotation of the turbocharger 20 by the motor means 51 in accordance with the setting of the taking-out amount of the pressurized air in this manner, it is possible to efficiently take out, from the turbocharger 20, pressurized air which is necessary for the air lubrication even when the main engine 10 is operated with low load.

When the setting of the operation of the air lubrication is not carried out by the taking-out amount setting means 53, the motor means 51 is not operated or controlled. Even if the setting of the operation of the air lubrication is carried out by the taking-out amount setting means 53, if the taking-out amount does not exceeds the predetermined amount, the motor means 51 is not operated or controlled. However, when the setting of the operation of the air lubrication is not carried out by the taking-out amount setting means 53, control of the motor means 51 is not hindered for a purpose other than the air lubrication.

The taking-out amount setting means 53 can be provided with a switch for selecting whether air lubrication should be carried out, and with an ON/OFF switch of the take-out valve 32. It may also be the taking-out amount setting means 53 automatically start or stop the air lubrication when an operation state of the main engine 10 or a marine navigation of the air lubrication type ship are brought into determined conditions. For example, the rotation number of the main engine 10 and the ship speed are provided with threshold values, and if it is detected that the rotation number of the main engine 10 and the ship speed become lower than the threshold values when the ship comes into harbor or stop, the air lubrication can automatically be stopped, and it is possible to detect that the rotation number of the main engine 10 and the ship speed become higher than the threshold value when the ship goes out on the broad ocean, and the air lubrication can automatically be started.

In the control means 54, when the taking-out amount of the pressurized air exceeds the predetermined amount which is set by the taking-out amount setting means 53, the motor means 51 assists rotation of the turbocharger 20. When the taking-out amount of the pressurized air exceeds the predetermined amount and the scavenging pressure starts lowering in this manner, the motor means 51 assists the turbocharger 20. According to this, the operation of the main engine 10 is not hindered.

The control means 54 controls the motor means 51 such that the scavenging pressure is kept at predetermined pressure . By keeping the scavenging pressure at the predetermined pressure in this manner, the air lubrication can be carried out without deteriorating the operation efficiency of the main engine 10.

Here, the predetermined pressure is determined by the turbocharger ability of the turbocharger 20 and the scavenging pressure or the draft pressure. The scavenging pressure is determined by a load of the main engine 10, and the draft pressure is determined by the draft of the ship.

Therefore, even if the draft of the ship or the load of the main engine 10 is varied, it is possible to carry out the air lubrication without deteriorating operation efficiency of the main engine 10.

In the control means 54, when the motor means 51 is driven and the scavenging pressure is brought into the predetermined pressure, if the pressure of the taken out pressurized air is insufficient, the taken out pressurized air is further pressurized by driving the assist blower 33.

Therefore, the pressurized air can further be pressurized up to pressure suitable for the air lubrication by the assist blower 33 while keeping the scavenging pressure at the predetermined pressure.

In the control means 54, the pressurized air is further pressurized by controlling the variable nozzle 23 before the motor means 51 is driven.

Therefore, the scavenging pressure can be brought to a value suitable for the main engine 10 by the variable nozzle 23, and when the variable nozzle 23 cannot bring the scavenging pressure to a sufficient value, energy efficiency can be enhanced by driving the motor means 51.

A detection value from the scavenging pressure detector 41 is input to the control means 54, and the control means 54 drives the motor means 51 such that the detected scavenging pressure becomes equal to the predetermined pressure.

A turbocharger rotation number detector 42 which detects the rotation number may be provided instead of providing the scavenging pressure detector 41.

The scavenging pressure can be obtained based on the rotation number of the turbocharger 20, the characteristics of the turbocharger and resistance of the passage, and the scavenging pressure can be calculated from the rotation number detected by the turbocharger rotation number detector 42. Here, in addition to resistance caused by the variable nozzle 23, resistance caused by the passage between the turbocharger 20 and the main engine 10, and resistance of the entire air supply passage 31 are included in the passage resistance.

The taking-out amount of the pressurized air is set based on a relation between an energy-saving amount achieved by supply of the taken out pressurized air to the ship's hull 1 and an energy amount which is necessary for the supply of the taken out pressurized air to the ship's hull 1. According to this, an optimal scavenging taking-out amount having excellent energy efficiency can be obtained. The necessary energy amount is varied by a load of the main engine 10 and draft pressure of the ship as described above, the energy-saving amount is also varied, and the optimal scavenging taking-out amount is also varied by a load of the main engine 10 and draft pressure of the ship.

A load of the main engine 10 is detected by load detection means 43. The load detection means 43 includes rotation number detection means which detects the rotation number of the main engine 10. The load of the main engine 10 is estimated from the rotation number of the main engine 10 detected by the rotation number detection means of the load detection means 43. Further, if torque of the main engine 10 is detected and is combined with the rotation number, it is possible to more reliably determine the load of the main engine 10.

When the load of the main engine 10 detected by the load detection means 43 is high, the turbocharger 20 rotates at high speed and an amount and pressure of the pressurized air are sufficient in many case, but when the detected load of the main engine 10 is low, the amount and the pressure of the pressurized air are prone to be insufficient. In such a case, the amount and the pressure of the pressurized air can be supplemented by assisting the rotation of the turbocharger 20 by the motor means 51.

When the main engine 10 starts, the load detection means 43 can detect the initial rise of the load, and the motor means 51 can handle the start of the main engine 10.

It is possible to assist the rotation of the turbocharger 20 by the motor means 51 so that an air amount required by the main engine 10 is reliably supplied at the time of initial rise and at the time of a steady operation.

Draft pressure detection means 44 provided in the ship's hull 1 detects the draft pressure of the ship. A detection value from the load detection means 43 and a detection value from the draft pressure detection means 44 are input to the control means 54, and a predetermined pressure of the scavenging pressure is determined. The expression "The load detection means 43" includes means for calculating a load from the rotation number and torque of the main engine 10, and means for obtaining the load from a set value of a governor 13 of the main engine 10. The expression "The load detection means 43" includes means for calculating a load from the rotation number and torque of the main engine 10, and means for obtaining the load from a set value of a governor 13 of the main engine 10. "The draft pressure detection means 44" includes means for obtaining draft from a shipment volume.

A taking-out amount of the pressurized air which is set by the taking-out amount setting means 53 is changed in accordance with draft of the ship. That is, the predetermined amount which is set by the taking-out amount setting means 53 is changed in accordance with draft pressure of the ship detected by the draft pressure detection means 44. By changing the predetermined amount in accordance with the draft, the draft is varied depending upon a degree of the shipment volume and in addition to this, it is possible to efficiently lubricate air with respect to the dynamic variation such as swing of the ship's hull 1. The expression "in accordance with draft" includes a case where the predetermined amount corresponding to the load amount related to a size of the draft is previously determined without using the draft pressure detection means 44, and an appropriate amount is automatically set in tandem with setting of the load amount.

The air supply control system of the embodiment includes a plurality of branched passages 39 in which the air supply passage 31 is branched into a plurality of passages. The air supply ports 4 are respectively connected to the plurality of branched passages 39. By providing the plurality of air supply ports 4 in this manner, it is possible to increase air to be discharged to a surroundings of the ship's hull 1, and the friction resistance can efficiently be reduced by discharging pressurized air which is taken out in accordance with requirement from an arbitrary air supply port 4.

Passage open/close valves 34 which open and close the branched passages 39 are provided on the way to and from the branched passages 39. By operating the passage open/close valves 34, one or some of the air supply ports 4 through which air is discharged can be selected. In a ballast state where a cargo is not loaded for example, the passage open/close valves 34 are operated, taken out pressurized air is discharged from the central two air supply ports 4, and discharge of the pressurized air taken out from the both right and left air supply ports 4 can be stopped. When the ship's hull 1 inclines and a right side is brought up during billows, an opening degree of one of the passage open/close valves 34 which is located on the right side and which does not contribute to the air lubrication so much is reduced or closed. According to this, a discharging amount of the pressurized air taken out from the air supply port 4 located on the right side end is reduced or the discharge is stopped, and it is possible to prevent the taken out pressurized air from being consumed wastefully.

If the branched passages 39 are closed by the passage open/close valves 34 when air lubrication is not carried out, it is possible to prevent water from reversely flowing from the air supply ports 4 to the assist blower 33 or to the main engine 10.

If the variable nozzle 23, the assist blower 33 and the motor means 51 are appropriately adjusted or operated in accordance with situations, it is possible to handle the variation of pressurized air pressure caused by increase or reduction of the air supply port 4 which operates the passage open/close valve 34.

The air supply passage 31 is provided with an air reservoir 55. By providing the air reservoir 55, it is possible to stabilize the supply of the taken out pressurized air to the air supply port 4. That is, in actual sea, even if variation in draft pressure is generated by variation in the load of the main engine 10 or by ship's hull movement, the flow rate variation and pressure variation of the air supply passage 31 are moderated, it is possible to moderate the variation of the amount of air introduced into the main engine 10 and variation of pressure and flow rate into the air lubrication, and it is possible to provide a stable efficient system.

In the control means 54, when the taking out operation of the pressurized air is started, i.e., when the take-out valve 32 is opened, the passage open/close valves 34 provided downstream-side of the air reservoir 55 are closed, and the take-out valve 32 is gradually opened by the taking-out means 52, a portion of pressurized air is taken out and this pressurized air is stored in the air reservoir 55. After pressure in the air reservoir 55 fully rises, if the passage open/close valves 34 are opened, it is possible to moderate excessive reduction of the scavenging pressure in the main engine 10 when the taking out operation of the pressurized air is started.According to this, even if a load of the main engine or draft pressure is varied by ship's hull movement in actual sea.

The air supply passage 31 is provided with a flow rate sensor 45a, and the branched passages 39 are respectively provided with flow rate sensors 45b. The flow rate sensor 45a detects an amount of pressurized air flowing through the air supply passage 31, and each of the flow rate sensors 45b detects an amount of pressurized air flowing through the branched passage 39.

The flow rate values detected by the flow rate sensor 45a and the flow rate sensors 45b are transferred to the control means 54, and used for controlling an amount of air for air lubrication. The flow rate sensor 45a may be provided in the air supply passage 31 at a location upstream-side, but if the flow rate sensor 45a is provided at the position shown in Fig. 2, one common flow rate sensor 45a is suffice in accordance with whether the assist blower 33 is used or not, or whether air is sucked from the atmosphere or not. It is preferable that the flow rate sensor 45a and the flow rate sensors 45b are mass flow rate sensors but they may be volume flow rate sensors. A hot wire flow rate sensor and so on can be used as the mass flow rate senor, and a vortex flow rate sensor and so on can be used as the volume flow rate senor.

Fig. 3 shows a relation between a scavenging amount and scavenging pressure of the turbocharger.

If a portion of the scavenging is taken out as pressurized air, the rotation number of the turbocharger 20 is reduced, and an air amount sent to the main engine 10 is reduced together with reduction in scavenging pressure.

Air passing through the turbocharger 20 is important for the main engine 10 to secure its performance and reliability, and the air amount must be secured appropriately. To secure an air amount which is necessary for the main engine 10, it is preferable to control to appropriately secure scavenging pressure after the inter-cooler 24 including not only a case where scavenging is utilized but also a case where air supply is utilized. Therefore, to operate the turbocharger 20 efficiently and with high characteristics, control is performed such that the rotation number of the turbocharger 20 is increased by the motor means 51 to maintain the scavenging pressure which is necessary for the main engine 10 as shown in Fig. 3.

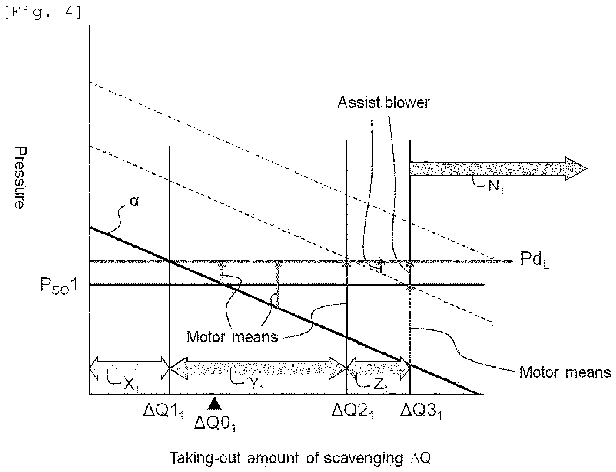

Figs. 4 to 9 show a relation between pressure and taking-out amount of the scavenging. A vertical axis shows pressure, and a lateral axis shows taking-out amount ΔQ of the scavenging.

Using Figs. 4 to 9, examples of control of the motor means 51 and the assist blower 33 by the control means 54 will be described. Since a load of the main engine 10 and draft of the ship are varied, the control means 54 controls the motor means 51 and the assist blower 33 in accordance with the taking-out amount of the scavenging while taking the load of the main engine 10 and the draft of the ship into account.

Fig. 4 shows a case where the draft of the ship is small and the main engine 10 is low-load operating (condition 1).

In condition 1, scavenging pressure which is necessary for maintaining performance and reliability of the main engine 10 ("necessary scavenging pressure", hereinafter) is Pso1 and draft pressure is Pd_{L}. The draft pressure Pd_{L} is pressure which is necessary for discharging air from the air supply port 4 to the ship's bottom 3 as bubbles in accordance with draft, i.e., necessary pressure from draft. The necessary scavenging pressure Pso1 and the draft pressure Pd_{L} are determined by condition 1. In condition 1, the draft pressure Pd_{L} is higher than the necessary scavenging pressure Pso1.

In Fig. 4, a diagonal line α shown by a solid line shows scavenging pressure (including variable nozzle 23) by characteristics of the turbocharger 20. Further, ΔQ0₁ shows a taking-out amount of optimal scavenging. A calculating method of the taking-out amount of optimal scavenging will be described later.

Until the taking-out amount ΔQ of the scavenging is increased to a taking-out amount ΔQ1₁, scavenging pressure by surplus ability of the turbocharger 20 exceeds necessary scavenging pressure Pso1 and draft pressure Pd_{L}, and scavenging can be taken out (section X₁) .

When the taking-out amount ΔQ of the scavenging increases and exceeds the taking-out amount ΔQ1₁, since scavenging pressure by the surplus ability of the turbocharger 20 becomes lower than the draft pressure Pd_{L}, the control means 54 drives the motor means 51. By assisting the rotation of the turbocharger 20 by the motor means 51, the scavenging pressure exceeds the draft pressure Pd_{L}, and the scavenging can be taken out (section Y₁). When the taking-out amount ΔQ of scavenging exceeds the turbocharger ability of the turbocharger 20 and the predetermined amount (taking-out amount ΔQ1₁) which is determined from the draft pressure Pd_{L} in this manner, the control means 54 operates the motor means 51. In condition 1, since the draft pressure Pd_{L} is higher than the necessary scavenging pressure Pso1, the predetermined amount (taking-out amount ΔQ1₁) is determined from the draft pressure Pd_{L} and the turbocharger ability of the turbocharger 20. By operating the motor means 51 based on higher one of the necessary scavenging pressure Pso1 and the draft pressure Pd_{L}, it is possible to more reliably carry out the air lubrication without deteriorating the operation efficiency of the main engine 10.

When the taking-out amount ΔQ of the scavenging further increases and exceeds a taking-out amount ΔQ2₁, since the maximum scavenging pressure (limit pressure of motor assist) when the motor means 51 assists the rotation of the turbocharger 20 becomes lower than the draft pressure Pd_{L}, the control means 54 drives the assist blower 33. By further pressurizing the taken out pressurized air by the assist blower 33, pressure of the taken out pressurized air exceeds the draft pressure Pd_{L}, and it is possible to supply an amount of air which is appropriate as air lubrication to the air supply port 4 (section Z₁).

When the taking-out amount ΔQ of scavenging further increases and exceeds a taking-out amount ΔQ3₁, since the maximum scavenging pressure when the motor means 51 assists rotation of the turbocharger 20 becomes lower than the necessary scavenging pressure Pso1, scavenging cannot be taken out (section N₁). Therefore, the air lubrication can be carried out only in a range where the taking-out amount ΔQ does not exceed the taking-out amount ΔQ3₁. If the assist blower 33 is not provided, air lubrication can be carried out in a range where the taking-out amount ΔQ does not exceed the taking-out amount ΔQ2₁.

The control means 54 controls the motor means 51 and the assist blower 33 while taking into account, the scavenging pressure of the turbocharger 20 determined by the load of the main engine 10 and draft pressure determined by draft of the ship. Hence, even if the draft of the ship and the load of the main engine 10 are varied, air lubrication can be carried out without deteriorating the operation efficiency of the main engine 10.

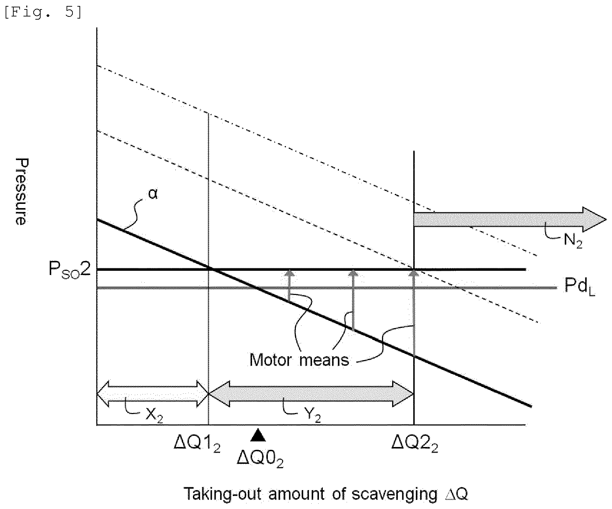

Fig. 5 shows a case where draft of the ship is small and the main engine 10 is operating with an intermediate load (condition 2). In condition 2, the necessary scavenging pressure is Pso2, and draft pressure is Pd_{L}. The necessary scavenging pressure Pso2 and the draft pressure Pd_{L} are determined by condition 2. In condition 2, the necessary scavenging pressure Pso2 is higher than the draft pressure Pd_{L}.

A diagonal line α shown by a solid line in Fig. 5 shows scavenging pressure (including variable nozzle 23) by characteristics of the turbocharger 20. Further, ΔQ0₂ shows a taking-out amount of optimal scavenging.

Until the taking-out amount ΔQ of scavenging is increased to a taking-out amount ΔQ1₂, scavenging pressure by the surplus ability of the turbocharger 20 exceeds necessary scavenging pressure Pso2 and the draft pressure Pd_{L}, and scavenging can be taken out (section X₂).

When the taking-out amount ΔQ of scavenging increases and exceeds the taking-out amount ΔQ1₂, since the scavenging pressure by the surplus ability of the turbocharger 20 becomes lower than the necessary scavenging pressure Pso2, the control means 54 drives the motor means 51. By assisting rotation of the turbocharger 20 of the motor means 51, the necessary scavenging pressure Pso2 is maintained and scavenging can be taken out (section Y₂). The control means 54 operates the motor means 51 when the taking-out amount ΔQ of the scavenging exceeds the turbocharger ability of the turbocharger 20 and the predetermined amount (taking-out amount ΔQ1₂) which is determined by the necessary scavenging pressure Pso2. Since the necessary scavenging pressure Pso2 is higher than the draft pressure Pd_{L} in condition 2, the predetermined amount (taking-out amount ΔQ1₂) is determined by the necessary scavenging pressure Pso2 and the turbocharger ability of the turbocharger 20. By operating the motor means 51 based on higher one of the necessary scavenging pressure Pso2 and the draft pressure Pd_{L}, it is possible to more reliably carry out the air lubrication without deteriorating operation efficiency of the main engine 10.

When the taking-out amount ΔQ of scavenging further increases and exceeds the taking-out amount ΔQ2₂, since the maximum scavenging pressure when the motor means 51 assists rotation of the turbocharger 20 becomes lower than the necessary scavenging pressure Pso2, scavenging cannot be takes out (section N₂). The assist blower 33 is for further pressurizing taken out pressurized air, and cannot pressurize pressurized air (scavenging) before it is taken out. Therefore, air lubrication can be carried out only in a range where the taking-out amount ΔQ does not exceed the taking-out amount ΔQ2₂.

The control means 54 controls the motor means 51 and the assist blower 33 while taking into account, the scavenging pressure of the turbocharger 20 determined by a load of the main engine 10 and the draft pressure determined by the draft of the ship. Therefore, even if the draft of the ship and a load of the main engine 10 are varied, it is possible to carry out the air lubrication without deteriorating operation efficiency of the main engine 10.

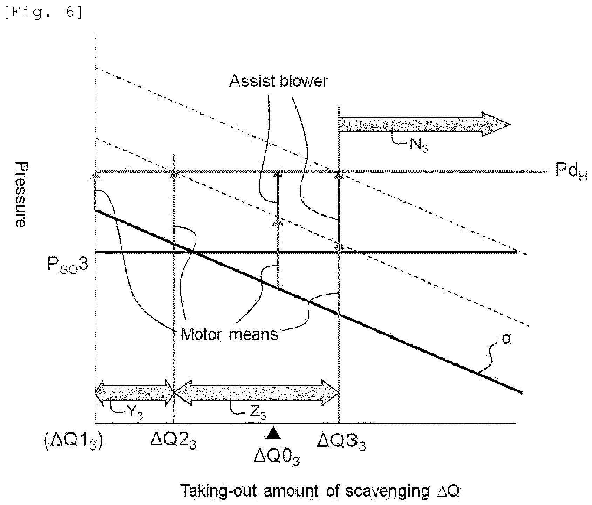

Fig. 6 shows a case where draft of the ship is large and the main engine 10 is low-load operating (condition 3). In condition 3, the necessary scavenging pressure is Pso3 and draft pressure is Pd_{H}. The necessary scavenging pressure Pso3 and the draft pressure Pd_{H} are determined by condition 3. In condition 3, draft pressure Pd_{H} is higher than the necessary scavenging pressure Pso3.

A diagonal line α shown by a solid line in Fig. 6 shows scavenging pressure (including variable nozzle 23) by characteristics of the turbocharger 20. Further, ΔQ0₃ shows a taking-out amount of optimal scavenging.

Even if the taking-out amount ΔQ of scavenging is larger than a taking-out amount ΔQ1₃ and smaller than a taking-out amount ΔQ2₃, since scavenging pressure by surplus ability of the turbocharger 20 becomes lower than draft pressure Pd_{H}, the control means 54 drives the motor means 51. If the motor means 51 assists rotation of the turbocharger 20, the scavenging pressure can exceed the draft pressure Pd_{H} and an appropriate amount of air as air lubrication can be supplied from the air supply port 4 (section Y₃). In this manner, when the taking-out amount ΔQ of scavenging exceeds the turbocharger ability of the turbocharger 20 and the predetermined amount (taking-out amount ΔQ1₃) determined from the draft pressure Pd_{H}, the control means 54 operates the motor means 51. In condition 3, since the draft pressure Pd_{H} is higher than the necessary scavenging pressure Pso3, the predetermined amount (taking-out amount ΔQ1₃) is determined by the draft pressure Pd_{H} and the turbocharger ability of the turbocharger 20. Since the motor means 51 is operated based on higher one of the necessary scavenging pressure Pso3 and the draft pressure Pd_{H}, it is possible to more reliably carry out the air lubrication without deteriorating the operation efficiency of the main engine 10.

When the taking-out amount ΔQ of scavenging increases and exceeds the taking-out amount ΔQ2₃, since the maximum scavenging pressure when the motor means 51 assists rotation of the turbocharger 20 becomes lower than the draft pressure Pd_{H}, the control means 54 drives the assist blower 33. By further pressurizing the taken out pressurized air by the assist blower 33, pressure of the taken out pressurized air exceeds the draft pressure Pd_{H}, and an appropriate amount of air as air lubrication can be supplied from the air supply port 4 (section Z₃).

When the taking-out amount ΔQ of scavenging further increases and exceeds a taking-out amount ΔQ3₃, since the maximum pressure (limit pressure of blower assist) when the taken out pressurized air is further pressurized by the assist blower 33 becomes lower than the draft pressure Pd_{H}, an appropriate amount of air cannot be supplied from the air supply port 4 as air lubrication (section N₃). Therefore, air lubrication can be carried out only in a range where the taking-out amount ΔQ does not exceed the taking-out amount ΔQ3₃. If the assist blower 33 is not provided, air lubrication can be carried out in a range where the taking-out amount ΔQ does not exceed the taking-out amount ΔQ2₃.

The control means 54 controls the motor means 51 and the assist blower 33 while taking into account, the scavenging pressure of the turbocharger 20 determined by the load of the main engine 10 and draft pressure determined by draft of the ship. Hence, even if the draft of the ship and the load of the main engine 10 are varied, air lubrication can be carried out without deteriorating the operation efficiency of the main engine 10.

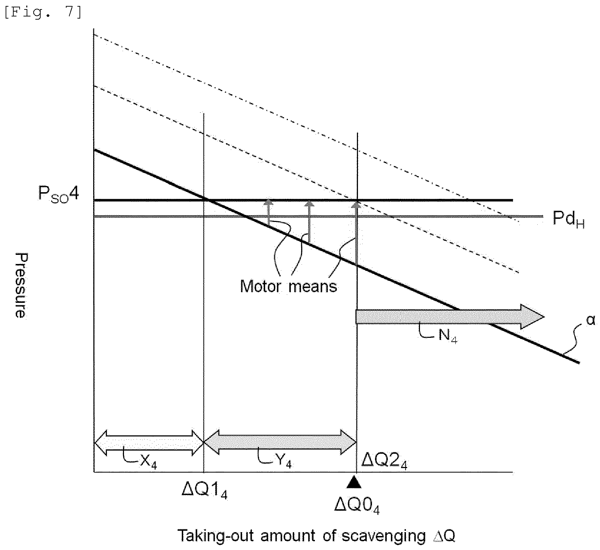

Fig. 7 shows a case where draft of the ship is large and the main engine 10 is high-load operating (condition 4). In condition 4, the necessary scavenging pressure is Pso4 and draft pressure is Pd_{H}. The necessary scavenging pressure Pso4 and the draft pressure Pd_{H} are determined by the condition 4. In condition 4, the necessary scavenging pressure Pso4 is higher than the draft pressure Pd_{H}.

A diagonal line α shown by a solid line in Fig. 7 shows scavenging pressure (including variable nozzle 23) by characteristics of the turbocharger 20. Here, ΔQ0₄ shows a taking-out amount of optimal scavenging.

Until the taking-out amount ΔQ of scavenging becomes the taking-out amount ΔQ1₄, scavenging pressure by surplus ability of the turbocharger 20 exceeds the necessary scavenging pressure Pso4 and the draft pressure Pd_{H}, and the scavenging can be taken out (section X₄).

When the taking-out amount ΔQ of scavenging increases and exceeds the taking-out amount ΔQ1₄, since the scavenging pressure by the surplus ability of the turbocharger 20 becomes lower than the necessary scavenging pressure Pso4, the control means 54 drives the motor means 51. By assisting rotation of the turbocharger 20 by the motor means 51, the necessary scavenging pressure Pso4 is maintained, and scavenging can be taken out (section Y₄). When the taking-out amount ΔQ of scavenging exceeds the turbocharger ability of the turbocharger 20 and the predetermined amount (taking-out amount ΔQ1₄) determined from the necessary scavenging pressure Pso4, the control means 54 drives the motor means 51 in this manner. In condition 4, since the necessary scavenging pressure Pso4 is higher than the draft pressure Pd_{H}, the predetermined amount (taking-out amount ΔQ1₄) is determined from the necessary scavenging pressure Pso4 and the turbocharger ability of the turbocharger 20. By operating the motor means 51 based on higher one of the necessary scavenging pressure Pso4 and the draft pressure Pd_{H}, it is possible to more reliably carry out the air lubrication without deteriorating the operation efficiency of the main engine 10.

If the taking-out amount ΔQ of scavenging further increases and exceeds a taking-out amount ΔQ2₄, since the maximum scavenging pressure when the motor means 51 assists rotation of the turbocharger 20 becomes lower than the necessary scavenging pressure Pso4, scavenging cannot be taken out (section N₄). The assist blower 33 is for further pressurizing taken out pressurized air, and cannot pressurize pressurized air (scavenging) before it is taken out. Therefore, air lubrication can be carried out only in a range where the taking-out amount ΔQ does not exceed the taking-out amount ΔQ2₄.

The control means 54 controls the motor means 51 and the assist blower 33 in this manner while taking into account, the scavenging pressure of the turbocharger 20 determined by a load of the main engine 10 and the draft pressure determined by draft of the ship. Therefore, even if draft of the ship and a load of the main engine 10 are varied, it is possible to carry out the air lubrication without deteriorating the operation efficiency of the main engine 10.

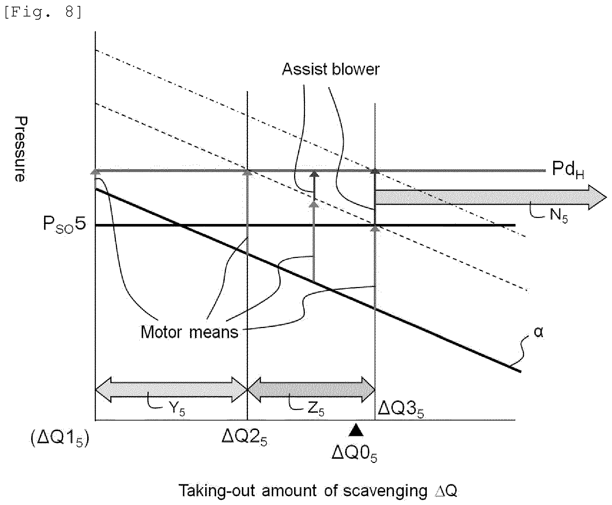

Fig. 8 shows a case where draft of the ship is large and the main engine 10 is intermediate-load operating (condition 5) . In condition 5, the necessary scavenging pressure is Pso5 and draft pressure is Pd_{H}. The necessary scavenging pressure Pso5 and the draft pressure Pd_{H} are determined by the condition 5. In condition 5, the draft pressure Pd_{H} is higher than the necessary scavenging pressure Pso5.

A diagonal line α shown by a solid line in Fig. 8 shows scavenging pressure (including variable nozzle 23) by characteristics of the turbocharger 20. Here, ΔQ0₅ shows a taking-out amount of optimal scavenging.

Even if the taking-out amount ΔQ of the scavenging is larger than the taking-out amount ΔQ1₅ and smaller than the taking-out amount ΔQ2₅, since the scavenging pressure by the surplus ability of the turbocharger 20 becomes lower than the draft pressure Pd_{H}, the control means 54 drives the motor means 51. By assisting the rotation of the turbocharger 20 by the motor means 51, the scavenging pressure exceeds the draft pressure Pd_{H}, an appropriate amount of air as air lubrication can be supplied from the air supply port 4 (section Y₅). In this manner, the control means 54 operates the motor means 51 when the taking-out amount ΔQ of the scavenging exceeds the turbocharger ability of the turbocharger 20 and the predetermined amount (taking-out amount ΔQ1₅) determined from the draft pressure Pd_{H}. In condition 5, since the draft pressure Pd_{H} is higher than the necessary scavenging pressure Pso5, the predetermined amount (taking-out amount ΔQ1₅) is determined from the draft pressure Pd_{H} and the turbocharger ability of the turbocharger 20. By operating the motor means 51 based on higher one of the necessary scavenging pressure Pso5 and the draft pressure Pd_{H}, it is possible to more reliably carry out the air lubrication without deteriorating the operation efficiency of the main engine 10.

When the taking-out amount ΔQ of the scavenging increases and exceeds the taking-out amount ΔQ2₅, the maximum scavenging pressure when the motor means 51 assists rotation of the turbocharger 20 becomes lower than the draft pressure Pd_{H}, the control means 54 drives the assist blower 33. By further pressurizing the taken out pressurized air by the assist blower 33, the pressure of the taken out pressurized air exceeds the draft pressure Pd_{H}, and an appropriate amount of air as air lubrication can be supplied from the air supply port 4 (section Z₅).

When the taking-out amount ΔQ of scavenging further increases and exceeds a taking-out amount ΔQ3₅, since the maximum pressure when the taken out pressurized air is further pressurized by the assist blower 33 becomes lower than the draft pressure Pd_{H}, an appropriate amount of air cannot be supplied from the air supply port 4 as air lubrication (section N₅). Therefore, air can be lubricated only up to a range not exceeding the taking-out amount ΔQ3₅. When the assist blower 33 is not provided, air lubrication can be carried out only up to a range not exceeding the taking-out amount ΔQ2₅.

In this manner, the control means 54 controls the motor means 51 and the assist blower 33 while taking into account, the scavenging pressure of the turbocharger 20 determined by a load of the main engine 10 and draft pressure determined by draft of the ship. Therefore, even if the draft of the ship and a load of the main engine 10 are varied, it is possible to carry out the air lubrication without deteriorating the operation efficiency of the main engine 10.

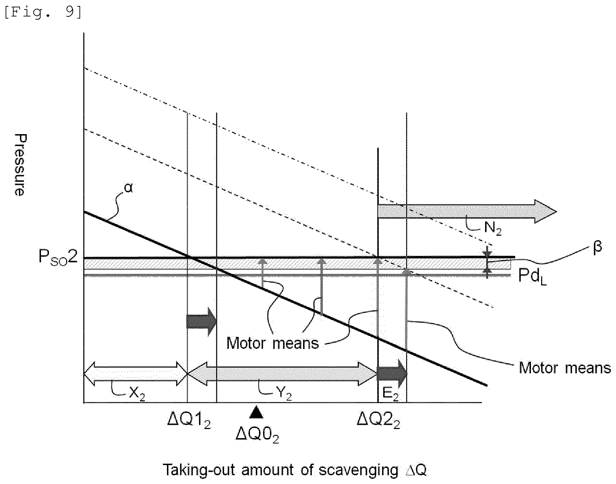

A case where to take out scavenging, a pressure reduction permissible range from the necessary scavenging pressure is taken into account will be described using Fig. 9. This case will be described based on condition 2 (Fig. 5).

The taking-out amount setting means 53 has a predetermined pressure reduction permissible width β from the necessary scavenging pressure Pso2. The pressure reduction permissible width β is determined from the characteristics of the main engine 10 and the optimal taking-out amount ΔQ01.

Therefore, even if When the taking-out amount ΔQ of scavenging increases and exceeds a taking-out amount ΔQ2₂ and the maximum scavenging pressure when the motor means 51 assists rotation of the turbocharger 20 becomes lower than the necessary scavenging pressure Pso2, the scavenging can be taken out up to a range not becoming lower than a lower limit of the pressure reduction permissible width β (section E₂). That is, a limit of a taking out amount of the scavenging is shifted to right, and the taking-out amount of the scavenging can be increased within the range of the pressure reduction permissible width β of the necessary scavenging pressure Pso2.

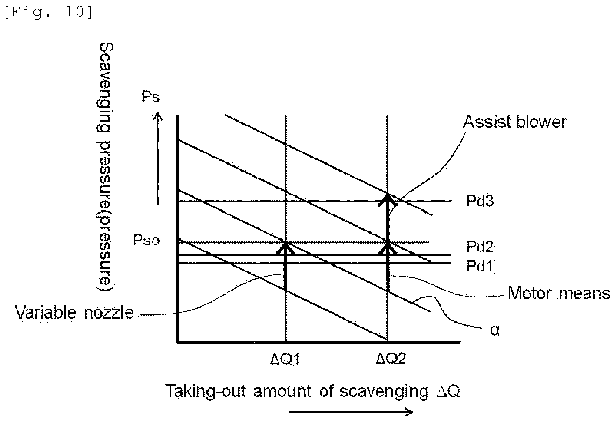

Fig. 10 shows a relation between the scavenging pressure (pressure) of an arbitrary load of the main engine and a taking-out amount of scavenging.

The example of the control means 54 with respect to the motor means 51 and the assist blower 33 was described using Figs. 4 to 9. Here, a method to prevent the scavenging pressure from reducing by taking out the scavenging, and to maintain necessary scavenging pressure for the main engine 10 will be described using Fig. 10.

In Fig. 10, Ps0 represents necessary scavenging pressure (pressure) of the main engine 10 in an arbitrary load, Pd1 represents a normal ballast draft pressure, pd2 represents Heavy ballast draft pressure, and pd3 represents full-loaded draft pressure Pd3.

When the necessary scavenging pressure Ps0 is higher than the draft pressure Pd1 and pd2, i.e., when the ship is mainly in the blast condition, if a taking-out amount of scavenging is ΔQ1, reduction of the scavenging pressure by the taking-out amount ΔQ1 of the scavenging is first supplemented by the variable nozzle 23.

If the variable nozzle 23 is made constant and the taking out operation of scavenging is started, the scavenging pressure tries to be lowered, but it is a basic to control such that the scavenging pressure is not lowered. Since the scavenging pressure increases or reduces also depending upon output of the load of the main engine 10, control is performed such that scavenging pressure corresponding to the load output is obtained. For example, an arbitrary load output and scavenging pressure at the time of bypassing in a position of the variable nozzle 23 are previously obtained and controlled.

If the taking-out amount of the scavenging is increased to a taking-out amount ΔQ2, the scavenging pressure is lowered, but by assisting rotation of the turbocharger 20 by the motor means 51, it is possible to maintain the necessary scavenging pressure Ps0.

When the necessary scavenging pressure Ps0 is lower than the draft pressure Pd3, i.e., when the ship is mainly full loaded, the scavenging pressure is first increased by the variable nozzle 23 and then, the motor means 51 assists rotation of the turbocharger 20. However, even if the necessary scavenging pressure Ps0 which is necessary for the main engine 10 is satisfied, since the scavenging pressure is lower than the draft pressure to supply appropriate amount of air as the air lubrication, the taken out pressurized air is further pressurized by the assist blower 33.

As described above, when the taking-out amount of scavenging exceeds the predetermined amount, the control means 54 performs control such that the motor means 51 assists the turbocharger 20. Therefore, the operation of the main engine 10 is not hindered.

This predetermined amount corresponds to the taking-out amount ΔQ1 in Fig. 10 for example. If the taking-out amount of scavenging exceeding ΔQ1 is set, the scavenging pressure which can be improved by the variable nozzle 23 is lowered, but to maintain the necessary scavenging pressure Ps0, the motor means 51 is operated to supplement the scavenging pressure.

By changing the predetermined amount in accordance with draft, it is possible to efficiently carry out the air lubrication against variation in load capacity of the ship, against variation in ship's speed, and against dynamic variation such as swing of the ship's hull. Here, the expression "changing the predetermined amount in accordance with draft" means that in Fig. 10 for example, in the ballast state, the necessary scavenging pressure Ps0 is suffice when air lubrication is carried out at the draft pressure Pd2, but since air pressure which is necessary for air lubrication also increase in the case of the full-loaded draft pressure Pd3, a taking-out amount (predetermined amount) of scavenging of operation start in which the motor means 51 is operated is set small, and scavenging pressure which is not excessively low is utilized.

In the above description, if the taking-out amount exceeds the taking-out amount ΔQ1, the motor means 51 is operated and control to assist the turbocharger 20 is performed. This is technically equal to a fact that if the necessary scavenging pressure becomes smaller than Ps0, the motor means 51 is operated to assist the turbocharger 20. This is apparent from a fact that the taking-out amount ΔQ1 and the necessary scavenging pressure Ps0 correspond to each other on one-on-one level with respect to the diagonal line α showing the scavenging pressure (including variable nozzle 23) by the characteristics of the turbocharger 20 as shown in Fig. 10. The same can be applied to the taking-out amount and the necessary scavenging pressure other than the taking-out amount ΔQ1 and the necessary scavenging pressure Ps0.

In the case of operation conditions and a system capable of satisfying the draft pressure Pd3 which is a full-loaded condition utilizing only the variable nozzle 23 and the motor means 51, a system and operation conditions which do not use the assist blower 33 should also exist. When the present invention is applied to the turbocharger 20 which does not use the variable nozzle 23 or to an existing ship having no variable nozzle 23, a case where air lubrication is carried out only by the motor means 51 and the assist blower 33, and a case where air lubrication is carried out only by the motor means 51 should also exist.

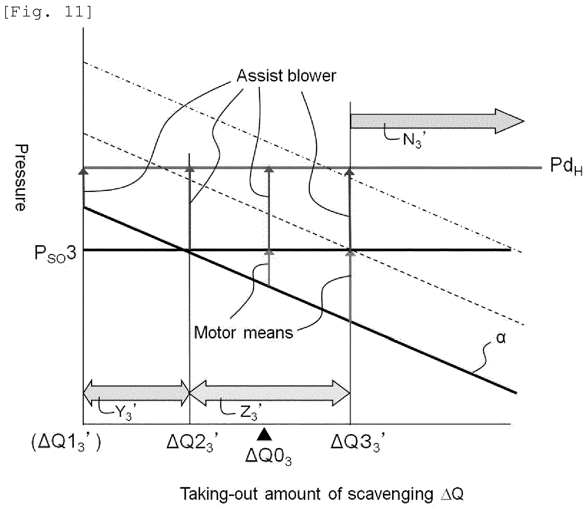

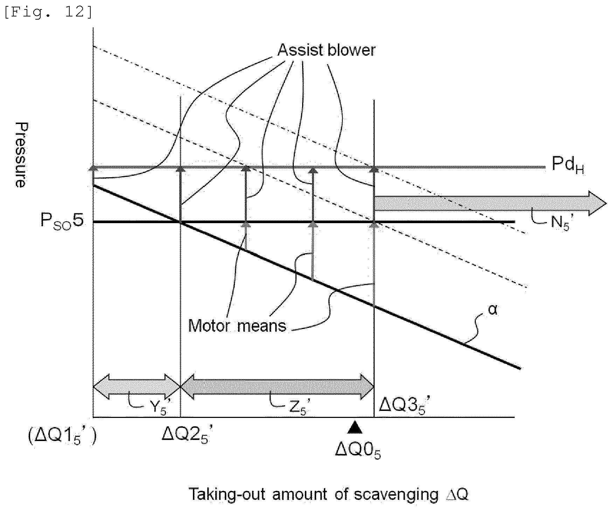

Other examples of control by the control means 54 with respect to the motor means 51 and the assist blower 33 in the above-described conditions 3 and 5 will be described. Fig. 11 is a diagram showing a relation between pressure and a taking-out amount of the scavenging in another example in condition 3. Fig. 12 is a diagram showing a relation between pressure and a taking-out amount of the scavenging in another example in condition 5. In each of Figs. 11 and 12, a vertical axis shows pressure, and a lateral axis shows a taking-out amount ΔQ of scavenging.

Since a load of the main engine 10 and draft of the ship are varied, the control means 54 controls the motor means 51 and the assist blower 33 in accordance with a taking-out amount of scavenging while taking the load of the main engine 10 and the draft of the ship into account.

Fig. 11 shows a case where draft of the ship is large and the main engine 10 is low-load operating (condition 3). In condition 3, necessary scavenging pressure is Pso3, and draft pressure is Pd_{H}. The necessary scavenging pressure Pso3 and the draft pressure Pd_{H} are determined by the condition 3. In condition 3, the draft pressure Pd_{H} is higher than the necessary scavenging pressure Pso3.

A diagonal line α shown by a solid line in Fig. 11 shows scavenging pressure (including variable nozzle 23) by characteristics of the turbocharger 20. Here, ΔQ0₃ shows a taking-out amount of optimal scavenging.

When the taking-out amount ΔQ of scavenging is larger than a taking-out amount ΔQ1₃' and smaller than a taking-out amount ΔQ2₃', the scavenging pressure by the surplus ability of the turbocharger 20 exceeds the necessary scavenging pressure Pso3 but becomes lower than the draft pressure Pd_{H}. Therefore, the control means 54 drives the assist blower 33. By further pressurizing taken out pressurized air by the assist blower 33, pressure of the taken out pressurized air exceeds the draft pressure Pd_{H}, and an appropriate amount of air as air lubrication can be supplied from the air supply port 4 (section Y₃'). When the scavenging pressure by the surplus ability of the turbocharger 20 is larger than the necessary scavenging pressure Pso3 and lower than the draft pressure Pd_{H} in this manner, the control means 54 drives the assist blower 33 faster than the motor means 51.

When the taking-out amount ΔQ of the scavenging increases and exceeds the taking-out amount ΔQ2₃', scavenging pressure by the surplus ability of the turbocharger 20 becomes lower than the necessary scavenging pressure Pso3. Therefore, the control means 54 drives the motor means 51. By assisting rotation of the turbocharger 20 by the motor means 51, the necessary scavenging pressure Pso3 is maintained and scavenging can be taken out. Although pressure of the taken out pressurized air becomes lower than the draft pressure Pd_{H}, pressure of the taken out pressurized air exceeds the draft pressure Pd_{H} by further pressurizing the taken out pressurized air by the assist blower 33, and an appropriate amount of air as air lubrication can be supplied from the air supply port 4 (section Z₃').

When the taking-out amount ΔQ of scavenging further increases and exceeds a taking-out amount ΔQ3₃', since the maximum pressure (limit pressure of blower assist) when the taken out pressurized air is further pressurized by the assist blower 33 becomes lower than the draft pressure Pd_{H}, an appropriate amount of air cannot be supplied from the air supply port 4 as air lubrication (section N₃'). Therefore, air lubrication can be carried out only within a range not exceeding the taking-out amount ΔQ3₃'.

In this manner, the control means 54 controls the motor means 51 and the assist blower 33 while taking into account, the scavenging pressure of the turbocharger 20 determined by a load of the main engine 10 and draft pressure determined by draft of the ship. Therefore, even if the draft of the ship and a load of the main engine 10 are varied, it is possible to carry out the air lubrication without deteriorating the operation efficiency of the main engine 10.

Further, in the control means 54, the assist blower 33 is driven based on draft of the ship, and when pressure of the pressurized air which is necessary in corresponding to a load of the main engine 10 is insufficient, since the motor means 51 is operated, if pressure of pressurized air which is necessary in corresponding to the load of the main engine 10 is sufficient, the assist blower 33 is first driven based on draft. Therefore, it is possible to suppress the operation frequency of the motor means 51 and to reduce an energy amount which is necessary for supply of pressurized air. Under condition where draft is deep, if the assist blower 33 is operated firster than the motor means 51 is operated, electric power which is necessary for supply of the pressurized air can be reduced in many cases in terms of efficiency.

Fig. 12 shows a case where draft of the ship is large and the main engine 10 is intermediate-load operating (condition 5). In condition 5, the necessary scavenging pressure is Pso5 and the draft pressure is Pd_{H}. The necessary scavenging pressure Pso5 and the draft pressure Pd_{H} are determined by condition 5. In configuration 5, draft pressure Pd_{H} is higher than the necessary scavenging pressure Pso5.

A diagonal line α shown by a solid line in Fig. 12 shows scavenging pressure (including variable nozzle 23) by characteristics of the turbocharger 20. Here, ΔQ0₅ shows a taking-out amount of optimal scavenging.

When the taking-out amount ΔQ of scavenging is larger than a taking-out amount ΔQ1₅' and smaller than a taking-out amount ΔQ2₅', the scavenging pressure by the surplus ability of the turbocharger 20 exceeds the necessary scavenging pressure Pso5 but becomes lower than the draft pressure Pd_{H}. Therefore, the control means 54 drives the assist blower 33. By further pressurizing taken out pressurized air by the assist blower 33, pressure of the taken out pressurized air exceeds the draft pressure Pd_{H}, and an appropriate amount of air as air lubrication can be supplied from the air supply port 4 (section Y₅'). When the scavenging pressure by the surplus ability of the turbocharger 20 is higher than the necessary scavenging pressure Pso5 and lower than the draft pressure Pd_{H} in this manner, the control means 54 drives the assist blower 33 faster than the motor means 51.

When the taking-out amount ΔQ of scavenging further increases and exceeds a taking-out amount ΔQ2₅, since the scavenging pressure by the surplus ability of the turbocharger 20 becomes lower than the necessary scavenging pressure Pso5, the control means 54 drives the motor means 51. By assisting rotation of the turbocharger 20 by the motor means 51, the necessary scavenging pressure Pso5 is maintained, and scavenging can be taken out. The pressure of the taken out pressurized air becomes than the draft pressure Pd_{H} but if the taken out pressurized air is further pressurized by the assist blower 33, the pressure of the taken out pressurized air exceeds the draft pressure Pd_{H}, and an appropriate amount of air as air lubrication can be supplied from the air supply port 4 (section Z₅').

When the taking-out amount ΔQ of the scavenging further increases and exceeds a taking-out amount ΔQ3₅', the maximum pressure when the taken out pressurized air is further pressurized by the assist blower 33 becomes lower than the draft pressure Pd_{H}, an appropriate amount of air cannot be supplied from the air supply port 4 as air lubrication (section N₅'). Therefore, the air lubrication can be carried out within a range not exceeding the taking-out amount ΔQ3₅'.

In this manner, the control means 54 controls the motor means and the assist blower 33 while taking into account, the scavenging pressure of the turbocharger 20 determined by a load of the main engine 10 and draft pressure determined by draft of the ship. Therefore, even if the draft of the ship and a load of the main engine 10 are varied, it is possible to carry out the air lubrication without deteriorating the operation efficiency of the main engine 10.

In the control means 54, the assist blower 33 is driven based on draft of the ship, and when pressure of the pressurized air which is necessary corresponding to the load of the main engine 10 is insufficient, the motor means 51 is operated. Therefore, when pressure of pressurized air which is necessary corresponding to the load of the main engine 10 is sufficient, the assist blower 33 is first driven based on draft. Therefore, it is possible to suppress the operation frequency of the motor means 51 and to reduce an energy amount which is necessary for supply of the pressurized air.

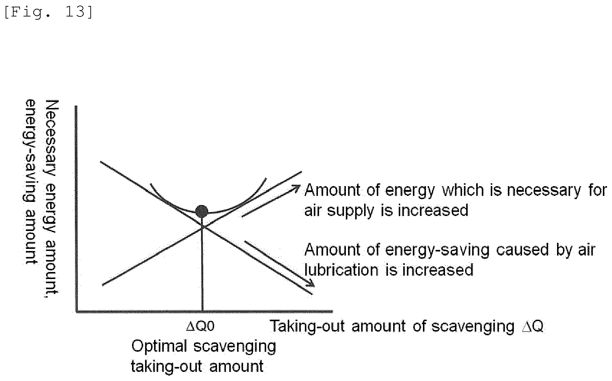

A calculation method of the taking-out amount of scavenging will be described using Fig. 13.

As shown in Fig. 13, if an air supply amount is increased in the air lubrication, since the friction resistance of the ship's hull 1 is reduced, the energy-saving amount is increased but an energy amount for supplying air is increased.

A taking-out amount ΔQ0 of optimal scavenging can be determined from a relation between the energy-saving amount achieved by the supply of the taken out pressurized air to the ship's hull 1 and an energy amount which is necessary for the supply of the taken out pressurized air to the ship's hull 1. The optimal scavenging taking-out amount ΔQ0 is previously determined by the actual operation of the ship and by various load conditions by calculation, and control is performed based on the determined optimal scavenging taking-out amount ΔQ0. A necessary energy amount is varied by a load of the main engine 10 and the draft pressure of the ship as described above, the energy-saving amount is also varied and the optimal scavenging taking-out amount ΔQ0 is also varied by the output of a load of the main engine 10 and the draft pressure of the ship.

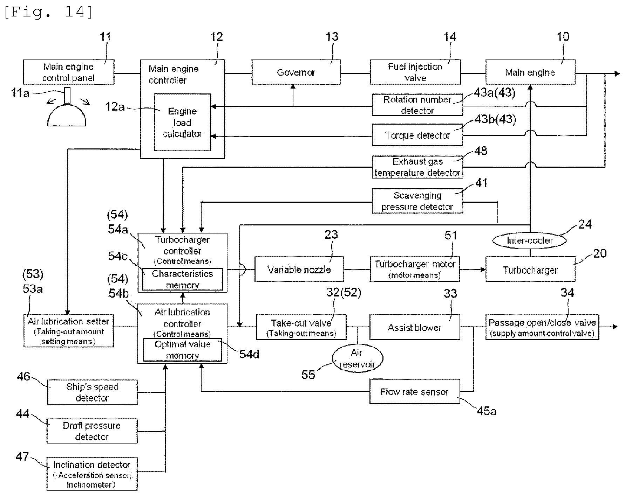

Fig. 14 is a block diagram of an air supply control system of an air lubrication type ship according to another embodiment.

A main engine 10 is operated by a main engine control panel 11. In the main engine control panel 11, a lever 11a is operated to a neutral position to stop, the lever 11a is operated toward one side to travel forward, and the lever 11a is operated toward the other side to travel rearward. By the turning operation of the lever 11a toward the one side and the other side, it is possible to set the rotation number of the main engine 10.

A main engine controller 12 controls changes of stop, forward travelling, rearward travelling (reverse rotation and shifting between gears) and the rotation number in accordance with the setting of the main engine control panel 11.

In accordance with the setting of the main engine control panel 11, the rotation number of the main engine 10 corresponding to the engine load is determined, and scavenging pressure (scavenging amount) which is necessary for combustion of the main engine 10 is determined.

A governor 13 converts set rotation number into a fuel amount, and adjusts a combustion amount corresponding to the rotation number. In the governor 13, the rotation number detected by a rotation number detector 43a provided in the main engine 10 is feedback, thereby adjusting the fuel amount such that the rotation number becomes equal to the set rotation number.

A fuel injection valve 14 injects a fuel amount which is controlled by the governor 13 through the main engine 10.

The rotation number detector 43a detects the rotation number of the output shaft of the main engine 10 (drive shaft of propeller 6), and a torque detector 43b detects torque of the output shaft of the main engine 10 (drive shaft of propeller 6)

An engine load calculator 12a calculates an engine load from the rotation number detected by the rotation number detector 43a and torque detected by the torque detector 43b. In Fig. 14, the rotation number detector 43a and the torque detector 43b configure the load detection means 43. The engine load can be calculated also from the rotation number and a fuel pump mark.

The turbocharger 20 can control in accordance with operation of the main engine 10. Air lubrication can be utilized in accordance with the operation of the main engine 10. That is, the turbocharger 20 can be controlled only when the forward travelling or the rearward travelling is set by the main engine control panel 11 in terms of control sequence.

A turbocharger controller 54a controls the variable nozzle 23 and a turbocharger motor 51. The turbocharger controller 54a includes a characteristics memory 54c. The characteristics memory 54c stores motor characteristics of the turbocharger 20, the variable nozzle 23 and the motor means (turbocharger motor) 51.

To secure necessary scavenging amount by the main engine 10 in a certain load, the turbocharger controller 54a controls the variable nozzle 23 and the turbocharger motor 51. The turbocharger controller 54a is controlled based on exhaust gas temperature detected by an exhaust gas temperature detector 48 and scavenging pressure detected by the scavenging pressure detector 41.

The scavenging pressure and the exhaust gas temperature are important as physical amounts related to a heat load of the main engine 10, and if they are taken out as physical amounts and used as constant variables, it is possible to preferably control without hindering the turbocharger 20.

Even when the air lubrication is not carried out, the variable nozzle 23 is controlled when the engine load is large.

The turbocharger motor 51 is driven also for securing a pressurized air (scavenging) amount when the operation of the main engine 10 is started. When the operation of the main engine 10 is started, since the rotation number of the turbocharger 20 is low, a sufficient pressurized air amount cannot be obtained, but if the turbocharger motor 51 assists the turbocharger 20, it is possible to secure a pressurized air amount which is necessary for starting.

To secure the necessary scavenging amount of the main engine 10, the scavenging pressure is detected and the variable nozzle 23 is first controlled, the scavenging pressure is controlled such that it becomes equal to a predetermined pressure, and if the control of the variable nozzle 23 reaches limitation, the turbocharger motor 51 is controlled, and the scavenging pressure is controlled such that it becomes equal to predetermined pressure.

An air lubrication setter 53a including the taking-out amount setting means 53 can turn an air lubrication switch ON when the operation of the main engine 10 is set.

The air lubrication setter 53a can set the number of air supply ports 4 and a taking-out amount of the pressurized air (scavenging). The taking-out amount of the pressurized air (scavenging) can be set as a flow rate, or can be set in such a manner that a loaded state (full-loaded, ballast) of the ship is set, and this is associated with a present appropriate flow rate, or an appropriate amount in accordance with draft can automatically be set.

An optimal value (optimal scavenging taking-out amount) of the taking-out amount of the pressurized air (scavenging) is previously obtained in accordance with a relation shown in Fig. 13, and is stored in an optimal value memory 54d.

In an air lubrication controller 54b, an air lubrication switch is turned ON by the air lubrication setter 53a, and if the start of the air lubrication is set, the take-out valve 32 is opened by the taking-out means 52. The take-out valve 32 is adjusted to such an opening degree that a taking-out amount of set pressurized air (scavenging) is obtained.

When the taking-out amount cannot be obtained even if the take-out valve 32 is fully opened, the variable nozzle 23 is controlled by the turbocharger controller 54a and then, the turbocharger motor 51 is controlled.

The taking-out amount of pressurized air is detected by the flow rate sensor 45a, and is compared with a set value by the air lubrication controller 54b, an opening degree of the take-out valve 32 is adjusted such that the taking-out amount of the pressurized air becomes equal to a set value, and the variable nozzle 23 and the turbocharger motor 51 are controlled by the turbocharger controller 54a.

When the load amount (load amount can be detected also by draft pressure detection means 44) is high and a taking-out amount is insufficient even if the variable nozzle 23 and the turbocharger motor 51 are controlled, the air lubrication controller 54b operates the assist blower 33.

Here, in Fig. 14, the turbocharger controller 54a and the air lubrication controller 54b configure the control means 54.

When the air lubrication is started, the take-out valve 32 and the bypass passage selecting means 36 of the bypass passage 35 are opened in a state where the passage open/close valve 34 is closed, and taken out pressurized air is stored in the air reservoir 55 and then, the passage open/close valve 34 is opened.

A ship's speed detector 46 detects ship's speed, a draft pressure detector (draft pressure detection means) 44 detects draft of the ship's hull 1, and an inclination detector 47 detects rolling, a heel, pitching and the like of the ship's hull 1.

The heel means a state where the ship's hull 1 continuously inclines toward on side in the width direction.

The inclination detector 47 is configured by an acceleration sensor for example, and functions as rolling detection means which detects rolling as swing of the ship's hull 1 of the ship, and pitching detection means which detects pitching of the ship's hull 1 as swing of the ship.

Further, as the heel detection means which detects the heel of the ship's hull 1, since an acceleration sensor cannot be used, an inclinometer is used.

By the ship's speed detected by the ship's speed detector 46, by draft of the ship's hull 1 detected by the draft pressure detection means 44, and by inclination of the ship's hull 1 detected by the inclination detector 47, it is possible to change the taking-out amount of the pressurized air, and to control the opening/closing operation of the passage open/close valve 34, and air lubrication can appropriately be carried out.

The plurality of passage open/close valves 34 respectively provided in the plurality of branched passages 39 are made to function as supply amount control valves 34 for controlling supply amounts of pressurized air which are taken out to the respective air supply ports 4. The inclination detector (acceleration sensor) 47 is made to function as rolling detection means which detects rolling of the ship's hull 1 of the ship. The air lubrication controller 54b controls the plurality of supply amount control valves 34 based on a result of detection of the rolling detection means, thereby reducing a supply amount of pressurized air which is taken out to the air supply port 4 having lower draft pressure. Therefore, even if the ship's hull 1 is inclined by rolling, the air lubrication can efficiently be carried out by reducing a supply amount of the pressurized air taken out to the air supply port 4 having lower draft pressure. Reduction of the supply amount of the taken out pressurized air includes stop of the supply amount. For example, when the opend air supply port 4 is at a higher location than draft, it is preferable that supply of the taken out pressurized air for the opened air supply port 4 is stopped. It is effective that the supply amount of the taken out pressurized air to the air supply port 4 having higher draft pressure is increased, but the supply amount may be maintained at the same level as before.

The passage open/close valves 34 respectively provided in the plurality of branched passages 39 are made to function as supply amount control valves 34 which control supply amounts of pressurized air taken out to the respective air supply ports 4. The inclination detector (inclinometer) 47 is made to function as heel detection means which detects the heel of the ship's hull 1 of the ship. The air lubrication controller 54b controls the plurality of supply amount control valves 34 based on a result of detection of the heel detection means, thereby reducing a supply amount of pressurized air which is taken out to the air supply port 4 having lower draft pressure. Therefore, even if the ship's hull 1 is inclined by the heel, the air lubrication can efficiently be carried out by reducing the supply amount of the pressurized air taken out to the air supply port 4 having lower draft pressure. The expression "reduction of the supply amount of the taken out pressurized air" includes stop of the supply amount. For example, when the opend air supply port 4 is at a higher location than draft, it is preferable that supply of the taken out pressurized air for the opened air supply port 4 is stopped. It is effective that the supply amount of the taken out pressurized air to the air supply port 4 having higher draft pressure is increased, but the supply amount may be maintained at the same level as before.

The passage open/close valves 34 respectively provided in the plurality of branched passages 39 are made to function as supply amount control valves 34 which control supply amounts of pressurized air taken out to the respective air supply ports 4. The inclination detector (acceleration sensor) 47 is made to function as pitching detection means which detects the pitching of the ship's hull 1 of the ship. The air lubrication controller 54b controls the plurality of supply amount control valves 34 based on a result of detection of the pitching detection means, thereby increasing or reducing a supply amount of pressurized air taken out to the air supply port 4 in accordance with variation in the draft pressure. Therefore, even if the draft pressure of the ship's hull 1 is varied by the pitching, the air lubrication can efficiently be carried out by reducing the supply amount of the pressurized air taken out to the air supply port 4 when the draft pressure is low. Reduction of the supply amount of the taken out pressurized air includes stop of the supply amount. When the draft pressure is high, it is effective to increase the supply amount of the pressurized air which is taken out to the air supply port 4, but the supply amount may be maintained at the same level as before.

When the air lubrication is stopped, if the air lubrication switch is turned OFF by the air lubrication setter 53a, the air lubrication controller 54b first closes the passage open/close valve 34 and then, the take-out valve 32 is closed by the taking-out means 52. When the assist blower 33 is operated, the passage open/close valve 34 is first closed and then, the operation of the assist blower 33 is stopped and lastly, the take-out valve 32 is closed.

These control operations are for preventing water from reversely flowing from the air supply port 4 into the air supply passage 31. During these stop-control operations, the taken out pressurized air is stored in the air reservoir 55, the take-out valve 32 is closed after the passage open/close valve 34 and according to this, the taken out pressurized air is held in the air reservoir 55. Therefore, even if the pressurized air is slightly leaked to the passage open/close valve 34 when the air lubrication is not carried out, it is possible to prevent water from reversely flowing into the air supply passage 31.

When the main engine 10 is continuously operated, the turbocharger motor 51 and the variable nozzle 23 are appropriately controlled by the turbocharger controller 54a so that the amount of pressurized air supplied to the main engine 10 during these stop-control operations does not become excessively large.

Acceding to this embodiment, the system is provided with available capacity for handling the influence of variation in draft pressure, and it is possible to efficiently take out pressurized air which is necessary for air lubrication from the turbocharger 20 even when the main engine 10 low-load operates without providing an expensive and high performance (turbo) electric blower.

### [INDUSTRIAL APPLICABILITY]

According to the air supply control system of the air lubrication type ship of the present invention, it is possible to efficiently take out pressurized air which is necessary for air lubrication from the turbocharger even when the main engine low-load operates without providing a high performance (turbo) electric blower. Further, by taking a load of the main engine and draft of the ship into account, air lubrication can be carried out without deteriorating the operation efficiency of the main engine even when draft of the ship and a load of the main engine are varied. Therefore, the present invention can be applied not only to large to small ships, but also can be applied to a floating body and an underwater navigation body which includes a main engine and a turbocharger similar to those of the ship and which marine-navigates.

### [EXPLANATION OF SYMBOLS]

1 ship's hull
4 air supply port
10 main engine
20 turbocharger
23 variable nozzle
24 inter-cooler
31 air supply passage
32 take-out valve (taking-out means)
33 assist blower
34 passage open/close valve (supply amount control valve)
39 branched passages
41 scavenging pressure detector
42 turbocharger rotation number detector
43 load detection means
43a rotation number detector
43b torque detector
44 draft pressure detection means (draft pressure detector)
45a flow rate sensor
45b flow rate sensor
47 inclination detector (rolling detection means, heel detection means, pitching detection means)
51 motor means (turbocharger motor)
52 taking-out means
53 taking-out amount setting means 53a air lubrication setter
54 control means
54a turbocharger controller
54b air lubrication controller
55 air reservoir

## Claims

1. An air supply control system of an air lubrication type ship, comprising a turbocharger (20) which is driven by exhaust gas from a main engine (10) of the ship and which supplies pressurized air to the main engine (10),
a taking-out means (32,52) which takes out a portion of the pressurized air from between the turbocharger (20) and the main engine (10) through bypassing,
an air supply passage (31) for supplying the taken out pressurized air to an air supply port (4) provided below a draft of the ship,
taking-out amount setting means (53) for setting a taking-out amount of the pressurized air by the taking-out means (32,52),
**characterised by**
motor means (51) for assisting rotation of the turbocharger (20), and
control means (54) which takes a load of the main engine (10) and the draft of the ship into account, and which controls the motor means (51) in accordance with setting of the taking-out amount by the taking-out amount setting means (53).

2. The air supply control system of the air lubrication type ship according to claim 1,
**characterised by**
the control means (54) controls the motor means (51) while taking into account, scavenging pressure of the turbocharger (20) determined by the load of the main engine (10) and draft pressure determined by the draft of the ship.

3. The air supply control system of the air lubrication type ship according to claim 2,
**characterised by**
when the taking-out amount exceeds a predetermined amount which is determined by turbocharger ability of the turbocharger (20) and the scavenging pressure or the draft pressure, the control means (54) operates the motor means (51).

4. The air supply control system of the air lubrication type ship according to claim 3,
**characterised by**
the predetermined amount is determined by higher one of the scavenging pressure and the draft pressure, and the turbocharger ability.

5. The air supply control system of the air lubrication type ship according to any one of claims 2 to 4,
**characterised by**
the control means (54) controls the motor means (51) such that the scavenging pressure of downstream-side of an inter-cooler (24) provided in a passage extending between the turbocharger (20) and the main engine (10) is kept at predetermined pressure.

6. The air supply control system of the air lubrication type ship according to any one of claims 1 to 5,
**characterised by**
the air supply passage (31) is provided with an assist blower (33) which further pressurizes the taken out pressurized air.

7. The air supply control system of the air lubrication type ship according to claim 6,
**characterised by**
when the motor means (51) is driven and rotation of the turbocharger (20) is assisted, if pressure of the taken out pressurized air is not sufficient, the control means (54) drives the assist blower (33) to further pressurize the taken out pressurized air.

8. The air supply control system of the air lubrication type ship according to claim 6,
**characterised by**
the control means (54) drives the assist blower (33) based on the draft of the ship, and, when the pressure of the pressurized air which is necessary in accordance with the load of the main engine (10) is not sufficient, the control means (54) operates the motor means (51).

9. The air supply control system of the air lubrication type ship according to any one of claims 1 to 8,
**characterised by**
the turbocharger (20) includes a variable nozzle (23), the control means (54) controls the variable nozzle (23) before the control means (54) drives the motor means (51), thereby further pressurizing the pressurized air.

10. The air supply control system of the air lubrication type ship according to any one of claims 2 to 5,
further comprising a scavenging pressure detector (41) which detects the scavenging pressure.

11. The air supply control system of the air lubrication type ship according to any one of claims 2 to 5,
further comprising a turbocharger rotation number detector (42) for detecting rotation number of the turbocharger (20), wherein the scavenging pressure is obtained based on the rotation number and turbocharger (20) characteristics.

12. The air supply control system of the air lubrication type ship according to any one of claims 1 to 11,
**characterised by**
the taking-out amount of the pressurized air is set based on a relation between a saved energy amount which is achieved by supply of the pressurized air taken out to the ship's hull (1) and an energy amount which is necessary to supply the taken out pressurized air to the ship's hull (1).

13. The air supply control system of the air lubrication type ship according to any one of claims 1 to 12,
further comprising a plurality of the air supply port (4), a plurality of supply amount control valves for controlling a supply amount of the pressurized air taken out to the air supply ports (4), and rolling detection means (47) which detects rolling of the ship's hull (1) of the ship, wherein the control means (54) controls the plurality of supply amount control valves based on a detection result of the rolling detection means (47), thereby reducing a supply amount of the pressurized air which is taken out to one of the air supply ports (4) having lower draft pressure.

14. The air supply control system of the air lubrication type ship according to any one of claims 1 to 12,
further comprising a plurality of the air supply port (4), a plurality of supply amount control valves for controlling a supply amount of the pressurized air which is taken out to the air supply ports (4), and heel detection means (47) for detecting a heel of the ship's hull (1) of the ship, wherein the control means (54) controls the plurality of supply amount control valves based on a detection result of the heel detection means (47), thereby reducing a supply amount of the pressurized air which is taken out to one of the air supply ports (4) having lower draft pressure.

15. The air supply control system of the air lubrication type ship according to any one of claims 1 to 12,
further comprising a plurality of the air supply port (4), a plurality of supply amount control valves for controlling a supply amount of the pressurized air which is taken out to the air supply ports (4), and pitching detection means (47) for detecting a pitching of the ship's hull (1) of the ship, wherein the control means (54) controls the plurality of supply amount control valves based on a detection result of the pitching detection means (47), thereby increasing or reducing a supply amount of the pressurized air taken out to the air supply ports (4) in accordance with variation of the draft pressure.

16. The air supply control system of the air lubrication type ship according to any one of claims 1 to 15,
**characterised by**
the air supply passage (31) is provided with an air reservoir (55), and supply of the taken out pressurized air to the air supply port (4) is stabilized.

17. The air supply control system of the air lubrication type ship according to claim 16,
**characterised by**
the control means (54) closes a passage open/close valve (34) provided downstream-side of the air reservoir (55) when the taking out of the pressurized air is started, the taking-out means (32,52) takes out the pressurized air and store the pressurized air in the air reservoir (55) and then, the passage open/close valve (34) is opened.

18. An air lubrication type ship
**characterised by**
the air supply control system of the air lubrication type ship according to any one of the claims 1 to 17 is provided.

## Patentansprüche

1. Luftzufuhrsteuerungssystem eines Schiffes vom Luftschmierungstyp, mit einem Turbolader (20), der durch Abgas von einer Hauptmaschine (10) des Schiffes angetrieben wird und der der Hauptmaschine (10) Druckluft zuführt, eine Entnahmeeinrichtung (32, 52), welche einen Anteil der Druckluft zwischen dem Turbolader (20) und der Hauptmaschine (10) durch Umgehung entnimmt, einem Luftzufuhrkanal (31) zum Zuführen der entnommenen Druckluft zu einem unterhalb eines Tiefganges des Schiffes vorgesehenen Luftzufuhranschluss (4),
einer Entnahmemengen-Einstelleinrichtung (53) zum Einstellen einer Entnahmemenge der Druckluft durch die Entnahmeeinrichtung (32, 52), **gekennzeichnet durch**
eine Motoreinrichtung (51) zur Unterstützung der Rotation des Turboladers (20), und
eine Steuereinrichtung (54), welche eine Last der Hauptmaschine (10) und den Tiefgang des Schiffes in Betracht zieht und welche die Motoreinrichtung (51) gemäß der Einstellung der Entnahmemenge durch die Entnahmemengen-Einstelleinrichtung (53) steuert.

2. Luftzufuhrsteuerungssystem des Schiffes vom Luftschmierungstyp nach Anspruch 1,
**gekennzeichnet dadurch, dass**
die Steuereinrichtung (54) die Motoreinrichtung (51) steuert, während sie einen durch die Last der Hauptmaschine (10) bestimmten Spüldruck des Turboladers (20) sowie einen durch den Tiefgang des Schiffes bestimmten Tiefgangdruck berücksichtigt.

3. Luftzufuhrsteuerungssystem des Schiffes vom Luftschmierungstyp nach Anspruch 2,
**gekennzeichnet dadurch, dass**,
wenn die Entnahmemenge eine vorgegebene Menge überschreitet, welche durch die Leistungsfähigkeit des Turboladers (20) und den Spüldruck oder den Tiefgangdruck bestimmt ist, die Steuereinrichtung (54) die Motoreinrichtung (51) betätigt.

4. Luftzufuhrsteuerungssystem des Schiffes vom Luftschmierungstyp gemäß Anspruch 3,
**gekennzeichnet dadurch, dass**
die vorgegebene Menge durch den jeweils höheren des Spüldrucks und des Tiefgangdrucks sowie die Leistungsfähigkeit des Turboladers bestimmt wird.

5. Luftzufuhrsteuerungssystem des Schiffes vom Luftschmierungstyp nach einem der Ansprüche 2 bis 4,
**gekennzeichnet dadurch, dass**
die Steuereinrichtung (54) die Motoreinrichtung (51) derart steuert, dass der Spüldruck auf der Seite stromabwärts eines Zwischenkühlers (24), welcher in einem zwischen dem Turbolader (20) und der Hauptmaschine (10) verlaufenden Kanal vorgesehen ist, auf einem vorgegebenen Druck gehalten wird.

6. Luftzufuhrsteuerungssystem des Schiffes vom Luftschmierungstyp nach einem der Ansprüche 1 bis 5,
**gekennzeichnet dadurch, dass**
der Luftzufuhrkanal (31) mit einem Hilfsgebläse (33) versehen ist, welches die entnommene Druckluft weiter druckbeaufschlagt.

7. Luftzufuhrsteuerungssystem des Schiffes vom Luftschmierungstyp nach Anspruch 6,
**gekennzeichnet dadurch, dass**,
wenn die Motoreinrichtung (51) angetrieben wird und die Rotation des Turboladers (20) unterstützt wird, falls der Druck der entnommenen Druckluft nicht ausreichend ist, die Steuereinrichtung (54) das Hilfsgebläse (33) antreibt,
um die entnommene Druckluft weiter mit Druck zu beaufschlagen.

8. Luftzufuhrsteuerungssystem des Schiffes vom Luftschmierungstyp nach Anspruch 6,
**gekennzeichnet dadurch, dass**
die Steuereinrichtung (54) das Hilfsgebläse (33) auf der Basis des Tiefganges des Schiffes antreibt, und, wenn der Druck der Druckluft, welcher gemäß der Last der Hauptmaschine (10) erforderlich ist, nicht ausreicht, die Steuereinrichtung (54) die Motoreinrichtung (51) betätigt.

9. Luftzufuhrsteuerungssystem des Schiffes vom Luftschmierungstyp gemäß einem der Ansprüche 1 bis 8,
**gekennzeichnet dadurch, dass**
der Turbolader (20) eine verstellbare Düse (23) aufweist, die Steuereinrichtung (54) die verstellbare Düse (23) steuert, bevor die Steuereinrichtung (54) die Motoreinrichtung (51) antreibt, wodurch die Druckluft weiter mit Druck beaufschlagt wird.

10. Luftzufuhrsteuerungssystem des Schiffes vom Luftschmierungstyp gemäß einem der Ansprüche 2 bis 5,
ferner mit einer Spüldruckerfassungseinrichtung (41), welche den Spüldruck erfasst.

11. Luftzufuhrsteuerungssystem des Schiffes vom Luftschmierungstyp nach einem der Ansprüche 2 bis 5,
ferner mit einer Turboladerdrehzahl-Erfassungseinrichtung (42) zum Erfassen der Drehzahl des Turboladers (20), wobei der Spüldruck auf der Basis der Drehzahl und Eigenschaften des Turboladers (20) erhalten wird.

12. Luftzufuhrsteuerungssystem des Schiffes vom Luftschmierungstyp nach einem der Ansprüche 1 bis 11,
**gekennzeichnet durch**
das Einstellen der Entnahmemenge der Druckluft auf der Basis einer Beziehung zwischen einer eingesparten Energiemenge, welche durch Zufuhr der entnommenen Druckluft in den Schiffskörper (1) erzielt wird, und einer Energiemenge, welche zum Zuführen der entnommenen Druckluft in den Schiffskörper (1) erforderlich ist.

13. Luftzufuhrsteuerungssystem des Schiffes vom Luftschmierungstyp nach einem der Ansprüche 1 bis 12,
ferner mit einer Mehrzahl der Luftzufuhranschlüsse (4), einer Mehrzahl von Zufuhrmengensteuerventilen zum Steuern einer Zufuhrmenge der entnommenen Druckluft zu den Luftzufuhranschlüssen (4), sowie einer Rollerfassungseinrichtung (47), welche ein Rollen des Schiffskörpers (1) des Schiffes erfasst, wobei die Steuereinrichtung (54) die Mehrzahl von Zufuhrmengensteuerventilen auf der Basis eines Erfassungsergebnisses der Rollerfassungseinrichtung (47) steuert, wodurch eine Zufuhrmenge der Druckluft, welche entnommen wird, zu einem der Luftzufuhranschlüsse (4) mit geringerem Tiefgangdruck verringert wird.

14. Luftzufuhrsteuerungssystem des Schiffes vom Luftschmierungstyp nach einem der Ansprüche 1 bis 12,
ferner mit einer Mehrzahl der Luftzufuhranschlüsse (4), einer Mehrzahl von Zufuhrmengensteuerventilen zum Steuern einer Zufuhrmenge der Druckluft, welche entnommen wird, zu den Luftzufuhranschlüssen (4) sowie einer Krängungserfassungseinrichtung (47) zum Erfassen einer Krängung des Schiffskörpers (1) des Schiffes, wobei die Steuereinrichtung (54) die Mehrzahl von Zufuhrmengensteuerventilen auf der Basis eines Erfassungsergebnisses der Krängungserfassungseinrichtung (47) steuert, wodurch eine Zufuhrmenge der Druckluft, welche entnommen wird, zu einem der Luftzufuhranschlüsse (4) mit geringerem Tiefgangdruck verringert wird.

15. Luftzufuhrsteuerungssystem des Schiffes vom Luftschmierungstyp nach einem der Ansprüche 1 bis 12,
ferner mit einer Mehrzahl der Luftzufuhranschlüsse (4), einer Mehrzahl von Zufuhrmengensteuerventilen zum Steuern einer Zufuhrmenge der Druckluft, welche entnommen wird, an die Luftzufuhranschlüsse (4) sowie einer Stampferfassungseinrichtung (47) zum Erfassen einer Stampfbewegung des Schiffskörpers (1) des Schiffes, wobei die Steuereinrichtung (54) die Mehrzahl von Zufuhrmengensteuerventilen auf der Basis eines Erfassungsergebnisses der Stampferfassungseinrichtung (47) steuert, wodurch eine Zufuhrmenge der entnommenen Druckluft zu den Luftzufuhranschlüssen (4) gemäß einer Veränderung des Tiefgangdrucks erhöht oder reduziert wird.

16. Luftzufuhrsteuerungssystem des Schiffes vom Luftschmierungstyp nach einem der Ansprüche 1 bis 15,
**gekennzeichnet dadurch, dass**
der Luftzufuhrkanal (31) mit einem Luftbehälter (55) versehen ist und die Zufuhr der entnommenen Druckluft zu dem Luftzufuhranschluss (4) stabil gehalten wird.

17. Luftzufuhrsteuerungssystem des Schiffes vom Luftschmierungstyp nach Anspruch 16,
**gekennzeichnet dadurch, dass**
die Steuereinrichtung (54) ein stromabwärts des Luftbehälters (55) vorgesehenes Kanal-Öffnungs-/Schließventil (34) schließt, wenn mit der Entnahme der Druckluft begonnen wird, die Entnahmeeinrichtung (32, 52) die Druckluft entnimmt und die Druckluft in dem Luftbehälter (55) speichert und daraufhin das Kanal-Öffnungs-/Schließventil (34) geöffnet wird.

18. Schiff vom Luftschmierungstyp,
**gekennzeichnet dadurch, dass**
das Luftzufuhrsteuerungssystem des Schiffes vom Luftschmierungstyp gemäß einem der Ansprüche 1 bis 17 vorgesehen ist.

## Revendications

1. Système de commande d'alimentation en air d'un navire de type à lubrification par air, comprenant un turbocompresseur (20) qui est entraîné par gaz d'échappement provenant d'un moteur principal (10) du navire et qui fournit l'air sous pression au moteur principal (10), un moyen d'extraction (32, 52) qui extrait une partie de l'air sous pression d'entre le turbocompresseur (20) et le moteur principal (10) par le biais d'une dérivation,
un passage d'alimentation en air (31) pour fournir l'air sous pression extrait à un orifice d'alimentation en air (4) prévu au-dessous d'un tirant d'eau du navire,
un moyen de réglage de quantité d'extraction (53) pour régler la quantité d'extraction de l'air sous pression par le moyen d'extraction (32, 52),
**caractérisé en ce que** :
un moyen moteur (51) pour assister la rotation du turbocompresseur (20), et
un moyen de commande (54) qui prend une charge du moteur principal (10) et le tirant d'eau du navire en compte, et qui commande le moyen moteur (51) selon le réglage de la quantité d'extraction par le moyen de réglage de quantité d'extraction (53).

2. Système de commande d'alimentation en air d'un navire de type à lubrification par air selon la revendication 1,
**caractérisé en ce que** :
le moyen de commande (54) commande le moyen moteur (51) tout en prenant en compte, la pression de balayage du turbocompresseur (20) déterminée par la charge du moteur principal (10) et la pression de tirant d'eau déterminée par le tirant d'eau du navire.

3. Système de commande d'alimentation en air d'un navire de type à lubrification par air selon la revendication 2,
**caractérisé en ce que** :
lorsque la quantité d'extraction dépasse une quantité prédéterminée qui est déterminée par la capacité de turbocompresseur du turbocompresseur (20) et la pression de balayage ou la pression de tirant d'eau, le moyen de commande (54) actionne le moyen moteur (51).

4. Système de commande d'alimentation en air d'un navire de type à lubrification par air selon la revendication 3,
**caractérisé en ce que** :
la quantité prédéterminée est déterminée par la plus haute parmi la pression de balayage et la pression de tirant d'eau, et la capacité de turbocompresseur.

5. Système de commande d'alimentation en air d'un navire de type à lubrification par air selon l'une quelconque des revendications 2 à 4,
**caractérisé en ce que** :
le moyen de commande (54) commande le moyen moteur (51) de sorte que la pression de balayage du côté en aval d'un refroidisseur intermédiaire (24) prévu dans un passage s'étendant entre le turbocompresseur (20) et le moteur principal (10) est maintenue à la pression prédéterminée.

6. Système de commande d'alimentation en air d'un navire de type à lubrification par air selon l'une quelconque des revendications 1 à 5,
**caractérisé en ce que** :
le passage d'alimentation en air (31) est prévu avec une soufflante d'assistance (33) qui met en outre sous pression l'air sous pression extrait.

7. Système de commande d'alimentation en air d'un navire de type à lubrification par air selon la revendication 6,
**caractérisé en ce que** :
lorsque le moyen moteur (51) est entraîné et que la rotation du turbocompresseur (20) est assistée, si la pression de l'air sous pression extrait n'est pas suffisante, le moyen de commande (54) entraîne la soufflante d'assistance (33) à continuer à mettre sous pression l'air sous pression extrait.

8. Système de commande d'alimentation en air d'un navire de type à lubrification par air selon la revendication 6,
**caractérisé en ce que** :
le moyen de commande (54) commande la soufflante d'assistance (33) sur la base du tirant d'eau du navire et lorsque la pression de l'air sous pression qui est nécessaire selon la charge du moteur principal (10) n'est pas suffisante, le moyen de commande (54) commande le moyen moteur (51).

9. Système de commande d'alimentation en air d'un navire de type à lubrification par air selon l'une quelconque des revendications 1 à 8,
**caractérisé en ce que** :
le turbocompresseur (20) comprend une buse variable (23), le moyen de commande (54) commande la buse variable (23) avant que le moyen de commande (54) entraîne le moyen moteur (51), continuant ainsi à mettre sous pression l'air sous pression.

10. Système de commande d'alimentation en air d'un navire de type à lubrification par air selon l'une quelconque des revendications 2 à 5,
comprenant en outre un détecteur de pression de balayage (41) qui détecte la pression de balayage.

11. Système de commande d'alimentation en air d'un navire de type à lubrification par air selon l'une quelconque des revendications 2 à 5,
comprenant en outre un détecteur de nombre de rotations de turbocompresseur (42) pour détecter le nombre de rotations du turbocompresseur (20), dans lequel la pression de balayage est obtenue sur la base du nombre de rotations et des caractéristiques du turbocompresseur (20).

12. Système de commande d'alimentation en air d'un navire de type à lubrification par air selon l'une quelconque des revendications 1 à 11,
**caractérisé en ce que** :
la quantité d'extraction de l'air sous pression est réglée sur la base d'une relation entre une quantité d'énergie économisée qui est obtenue par l'alimentation de l'air sous pression extrait de la coque (1) du navire et une quantité d'énergie qui est nécessaire pour fournir l'air sous pression extrait à la coque (1) du navire.

13. Système de commande d'alimentation en air d'un navire de type à lubrification par air selon l'une quelconque des revendications 1 à 12,
comprenant en outre une pluralité d'orifices d'alimentation en air (4), une pluralité de valves de régulation de quantité d'alimentation pour réguler une quantité d'alimentation d'air sous pression extrait aux orifices d'alimentation en air (4), et un moyen de détection de roulis (47) qui détecte le roulis de la coque (1) du navire, dans lequel le moyen de commande (54) commande la pluralité de valves de régulation de quantité d'alimentation sur la base d'un résultat de détection du moyen de détection de roulis (47), réduisant ainsi une quantité d'alimentation d'air sous pression qui est extrait de l'un des orifices d'alimentation en air (4) ayant une pression de tirant d'eau inférieure.

14. Système de commande d'alimentation en air d'un navire de type à lubrification par air selon l'une quelconque des revendications 1 à 12,
comprenant en outre une pluralité d'orifices d'alimentation en air (4), une pluralité de valves de régulation de quantité d'alimentation pour réguler une quantité d'alimentation d'air sous pression qui est extrait aux orifices d'alimentation en air (4), et un moyen de détection de gîte (47) pour détecter un gîte de la coque (1) du navire, dans lequel le moyen de commande (54) commande la pluralité de valves de régulation de quantité d'alimentation sur la base d'un résultat de détection du moyen de détection de gîte (47), réduisant ainsi une quantité d'alimentation d'air sous pression qui est extrait de l'un des orifices d'alimentation en air (4) ayant une pression de tirant d'eau inférieure.

15. Système de commande d'alimentation en air d'un navire de type à lubrification par air selon l'une quelconque des revendications 1 à 12,
comprenant en outre une pluralité d'orifices d'alimentation en air (4), une pluralité de valves de régulation de quantité d'alimentation pour réguler une quantité d'alimentation d'air sous pression qui est extrait, aux orifices d'alimentation en air (4) et un moyen de détection de tangage (47) pour détecter un tangage de la coque (1) du navire, dans lequel le moyen de commande (54) commande la pluralité de valves de régulation de quantité d'alimentation sur la base d'un résultat de détection du moyen de détection de tangage (47), augmentant ou réduisant ainsi une quantité d'alimentation de l'air sous pression extrait, aux orifices d'alimentation en air (4) selon la variation de la pression de tirant d'eau.

16. Système de commande d'alimentation en air d'un navire de type à lubrification par air selon l'une quelconque des revendications 1 à 15,
**caractérisé en ce que** :
le passage d'alimentation en air (31) est prévu avec un réservoir d'air (55), et l'alimentation de l'air sous pression extrait, à l'orifice d'alimentation en air (4) est stabilisée.

17. Système de commande d'alimentation en air d'un navire de type à lubrification par air selon la revendication 16,
**caractérisé en ce que** :
le moyen de commande (54) ferme une valve d'ouverture/fermeture de passage (34) prévue du côté en aval du réservoir d'air (55) lorsque l'extraction de l'air sous pression commence, le moyen d'extraction (32, 52) extrait l'air sous pression et stocke l'air sous pression dans le réservoir d'air (55) et ensuite la valve d'ouverture/fermeture de passage (34) s'ouvre.

18. Navire de type à lubrification par air :
**caractérisé en ce que** :
le système de commande d'alimentation en air du navire de lubrification en air selon l'une quelconque des revendications 1 à 17 est prévu.
